Europäisches Patentamt

European Patent Office

Office européen des brevets

(19)

(11) Publication number: **0 079 140**

**A1**

(12) **EUROPEAN PATENT APPLICATION**

(21) Application number: **82305494.5**

(22) Date of filing: **15.10.82**

(51) Int. Cl.³: **G 06 F 3/04**

(30) Priority: **15.10.81 US 311605**

(43) Date of publication of application:
**18.05.83 Bulletin 83/20**

(84) Designated Contracting States:
**DE FR GB**

(71) Applicant: CONVERGENT TECHNOLOGIES INC.
2500 Augustine Drive
Santa Clara California 94303(US)

(72) Inventor: Lowenthal, Richard W.
21535 Madrone Drive
Los Gatos California 95030(US)

(74) Representative: Paget, Hugh Charles Edward et al,
MEWBURN ELLIS & CO. 2·3 Cursitor Street
London EC4A 1BQ(GB)

(54) Multiple computing systems and communication bus structure therefor.

(57) A local system bus, including the necessary address, data and control lines, communicates a local central processor, memory, input/output and control resources forming a first computing system for executing processing operations. A controllable user bus interface circuit selectively couples the local system bus to a user system bus for selected communication therebetween. The user system bus includes the necessary address, data and control lines capable of communicating the user central processor, memory, input' output and control resources, organized as a second computing system, for executing processing functions. The user bus interface circuit is controllable to permit undedicated local memory resources to be accessed by the user system bus for data transfer therebetween, undedicated user memory or input/output resource access by the local system bus for data transfers therebetween and isolation of the two system buses from each other. The controllable user bus interface circuit maintains asynchronous separation between the two system buses, which allows separate processing operations to be executed simultaneously on the two system buses whenever there are no transfers across the user bus interface circuit in progress.

./...

FIG. I

# MULTIPLE COMPUTING SYSTEMS
## AND COMMUNICATION BUS STRUCTURE THEREFOR

The present invention relates generally to data processing systems and, more particularly, to coupling resources of different data processing systems.

General purpose computing data processing systems typically include a central processor unit (CPU), memory, input/output and control resources communicated together by a system bus for desired data processing. Data that is processed is communicated by the system bus between the CPU and the associated resources, usually, via the memory resource. Users of general purpose computing data processing systems often have special needs requiring the addition to the systems of resources either not included in the systems when acquired or not available from the suppliers of the systems.

To satisfy such needs, general purpose computing data processing systems traditionally include provisions for the addition of user resources. In some systems space is allocated on the system bus for user additions. In other systems, special input/output (I/O) buses are provided for user additions. In either case, the user additions ordinarily are electrically buffered to the computing system and synchronously operated therewith.

Many undesirable consequences often flow from the addition of user resources in such general purpose computing data processing systems. Most importantly from the viewpoint of the system manufacturer, the performance of the system is subject to and often is limited by the resources added by the user. System diagnostic operations are complicated and frequently are incapable of being executed without reconfiguring the system to eliminate or mask added user resources. Any degradation of the performance of the system is, of course, undesirable. However, the incapability of executing diagnostic operations with the system in the identical configuration as employed by the user often leads to disputes regarding the cause and responsibility for system malfunctions. Resolution of the disputes and delays in correcting the malfunctions resulting from the disputes are costly.

Most importantly from the viewpoint of the user who adds resources to such general purpose computing data processing systems, the design of the user added resource is determined by the hardware and software specifications of the system. Changes in those specifications frequently necessitate corresponding changes in the user resource design. This impacts the user in two significant ways. Manufacturers of general purpose computing data processing systems routinely make hardware and software system modifications available to users so that systems in the field can be adapted to incorporate enhancements as they are developed by the manufacture. The inability or the user's unwillingness to make accommodating changes in the user added resources prevents upgrading the system to incorporate the enhancements.

The second impact concerns the acquisition of additional data processing systems by a user. It is common for users to expand their data processing capacity through acquisition of additional data processing systems. Usually, compatibility of the original and additional data processing systems and all user added resources is an imperative. Typically, however, manufacturers of such systems only offer systems in a configuration that includes the latest enhancements. When acquiring additional data processing systems, therefore, it may be necessary to modify user added resources to accommodate the manufacturer's enhancements to the system to realize the aforementioned compatibility.

In addition, users are faced with hardware and software specifications of general purpose computing data processing systems that vary from manufacturer-to-manufacturer. Consequently, resources are not readily adaptable to different data processing systems, unless the different systems incorporate a bus or other communication link of the same protocol for the resources. Ordinarily, such communication links are located on a special I/O bus, where communications are executed by user added resources at relatively low data transfer rates. All of these impacts on users have the potential for added expense and/or less efficient data processing operations. As a result, once a user has committed to a particular general purpose computing data processing system, there is great reluctance to change to a modified or different system.

Considerable advantages will be realized, therefore, from a computing data processing system that facilitates the addition of user resources without degrading the system performance, which resources are uneffected by modifications in the computing system. Further advantages will be realized from such a computing system that enables any type of resource, i.e., CPU, memory, input/output, etc., to be added to the system and operated asynchronously with respect thereto, except when transfers occur between the system and user resources, with transfers capable of being executed at data transfer rates comparable to those for transfers between equivalent system resources.

The communication bus structure of the present invention enables all of the aforementioned advantages to be realized and, when united with computing data processing system resources, provides an efficient and flexible computing system that is easily customized to special user applications. Furthermore, as will become more apparent upon consideration of the following description, the bus structure of the present invention facilitates the construction of computing systems including asynchronously separated local and remote system buses that enable operatively associated local and remote resources to operate at different speeds, to be protected against unauthorized accesses from each other and to execute simultaneously separate processes. As used herein, "system bus" means a set or collection of signal lines capable of communicating the resources required for independent execution of data processing and, generally, includes subsets of address, data and control lines.

More specifically, a local system bus is coupled by required controllable interface means to local CPU, memory and operator I/O resources to form a local first computing system for executing processing operations. A controllable remote bus interface means selectively couples the local system bus to a remote system bus so that communications can occur between local resources coupled to the local system bus and remote resources coupled to the remote system bus. The remote resources may include any one or more resources customarily found in computing systems and, in practice, the remote resources coupled to the remote system bus may form a remote second computing system for executing processing operations simultaneously and independently of such operations executed by the local computing system.

The remote bus interface means maintains asynchronous separation between the local and remote system buses and is controllable to couple and decouple the buses selectively so that selected transfers are allowed to occur between undedicated resources coupled to the buses and isolation of the buses from each other is established whenever there are no transfers occurring between the buses. While the local and remote system buses are isolated, separate processing operations may be executed simultaneously by the resources coupled to the asynchronously separated local and remote buses. A resource is undedicated in the sense that it can be accessed by any resource having the capability of establishing an access, whereas a resource is dedicated in the sense that it can only be accessed by a master of the system in which the dedicated resource is located.

In a preferred embodiment of the computing system of the present invention, the remote bus interface is selectively controlled to assume one of three operating conditions. In one of the operating conditions, it permits access to undedicated local memory resources by remote resources for data transfers between those resources. In another of the three operating conditions, the remote bus interface is selectively controlled to permit access to undedicated remote memory or I/O resources by the local computing system for data transfers. At all other times, the remote bus interface is in its third operating condition, being controlled to isolate the local and remote buses from each other. This bus and controlled interface arrangement restricts all remote resource accesses to dedicated local memory resources of the local computing system, whether data is transferred to the local computing system by accessing remote resource or is transferred from the local computing system to the accessing remote resource. On the other hand, the bus and controlled interface arrangement does not so restrict access of remote resources by the local computing system. The local computing system is permitted to access any of the undedicated remote memory and remote I/O resources, whether data is transferred to the accessed remote resource by the local computing system or is transferred from the accessed remote resource by the local computing system.

The selective coupling and decoupling of the local and remote buses by the remote bus interface is controlled in accordance with address spaces assigned to all local and remote resources. A control means is operatively associated with the remote bus interface means and is responsive to address signals communicated on the address lines of the two buses for controlling the remote bus interface means to establish a communication condition between the local and remote system buses determined by the addresses communicated to the address lines. The remote resources are assigned addresses outside an address range selected for the local resources so that the control means responds to the occurrence in the local computing system of a request for access to an address located outside the selected local address range by establishing communication between the local and remote buses. Similarly, the control means responds to the occurrence on the remote bus of a request for access to an address located within the selected local address range by establishing communication between the remote and local buses. However, dedicated local resources are protected against access by remote resources by the control means, which is arranged to respond to only certain addresses within the selected local address range for purposes of establishing communication between the requesting remote bus and the local computing system. Those certain addresses identify undedicated local resources, such as the aforementioned local memory resource, to which a remote resource is permitted access. It should be appreciated that the control means can be arranged to protect selected remote resources against access by local resources in a similar manner.

The aforedescribed bus structure and interface arrangement provides asynchronous separation with controlled, selective communication between the local and remote resources. This permits simultaneous execution of independent processing on the local and remote buses according to different independent protocols. By fixing the protocol of the remote bus and reserving it to users of the local computing system, the user's resources can be made transparent to the local computing system. Furthermore, other than having to satisfy the protocol selected for the remote bus and concomitant restriction they impose, the design of user resources is independent of the protocol selected for the local bus and is uneffected by modifications to the hardware and software design of the local computing system that do not effect the remote bus protocol. Selecting a widely used protocol for the remote bus protocol permits users to take advantage of available resources satisfying such protocol, thereby avoiding having to design new or modify old resources for use on the remote bus. The P796 Microcomputer System Bus Standard proposed by the Institute of Electrical and Electronic Engineers, Inc., (IEEE) is such a protocol. That protocol is sometimes referred to as the Multibus protocol. (Multibus is a trademark of Intel Corporation.) The preferred embodiment of the present invention includes a remote bus satisfying the Multibus protocol. At times hereinafter, the remote bus will be referred to as Multibus.

With the local and remote buses, hence, their associated resources thusly isolated and selectively communicated, the local computing system can be configured to include primarily dedicated resources, allowing direct access by remote resources only to selected local memory resources. The processing rate of such local computing system can be different from that occurring on the remote bus. In the preferred embodiment of the present invention, the local computing system is capable of processing data at a rate considerably faster than that permitted by Multibus protocol of the remote bus.

The foregoing and other features and advantages of the bus structure and computing system of the present invention will become more apparent upon consideration of the following more detailed description of a preferred embodiment of the invention and appended claims taken together with the accompanying drawings in which:

FIGURE 1 is a block diagram of the preferred embodiment of the bus structure and computing system of the present invention, with control lines of the buses omitted for clarity of illustration;

FIGURE 2 is a block diagram of the local CPU and clock generator portion of the system illustrated in FIGURE 1, showing the control lines associated with the local CPU and clock generator;

FIGURE 3 is a block diagram of the DMA (direct memory access) and bus control portion of the system illustrated in FIGURE 1, showing the control lines associated with the DMA and bus control;

FIGURE 4 is a block diagram of the timing and interrupt control illustrated in FIGURE 1, showing the control lines associated with the interrupt control;

FIGURE 5 is a block diagram of the control portion of the user bus interface illustrated in FIGURE 1, showing the control lines associated with the user bus interface;

FIGURE 6 is a block diagram of the PROM (programmable read-only memory) boot control portion of the memory and control illustrated in FIGURE 1, showing the PROM control lines associated with the memory;

FIGURE 7 is a block diagram of the memory control portion of the memory and control illustrated in FIGURE 1, showing the RAM (random access memory) control lines associated with the memory;

FIGURE 8 is a block diagram of the RAM column address generator portion of the memory and control illustrated in FIGURE 1, showing the column address RAM control lines associated with the memory;

FIGURE 9 is a block diagram of the RAM address control portion of the memory and control illustrated in FIGURE 1, showing the address RAM control lines associated with the memory;

FIGURE 10 is a block diagram of the RAM data bussing portion of the memory and control illustrated in FIGURE 1, showing the data interface between the RAM memory and the local data bus;

FIGURES 11A, 11B and 11C are block diagrams of the data bussing portions of the local bus, user bus and local I/O bus interfaces illustrated in FIGURE 1, with FIGURE 11A showing the data interface between the multiplexed CPU bus and the local data bus, FIGURE 11B showing the data interface between the local data bus and the user data bus, and FIGURE 11C showing the data interface between the local data bus and the local I/O bus;

FIGURES 12A, 12B and 12C are block diagrams of the addressing bussing portions of the local, user and I/O bus interfaces and the DMA (direct memory access) illustrated in FIGURE 1, with FIGURE 12A showing the address interface between the multiplexed CPU bus and the local address bus, FIGURE 12B showing the address interface

0079140

-11-

between the local address bus and the user address bus and FIGURE 12C showing the address interface between the local address bus and both the DMA and the local I/O bus;

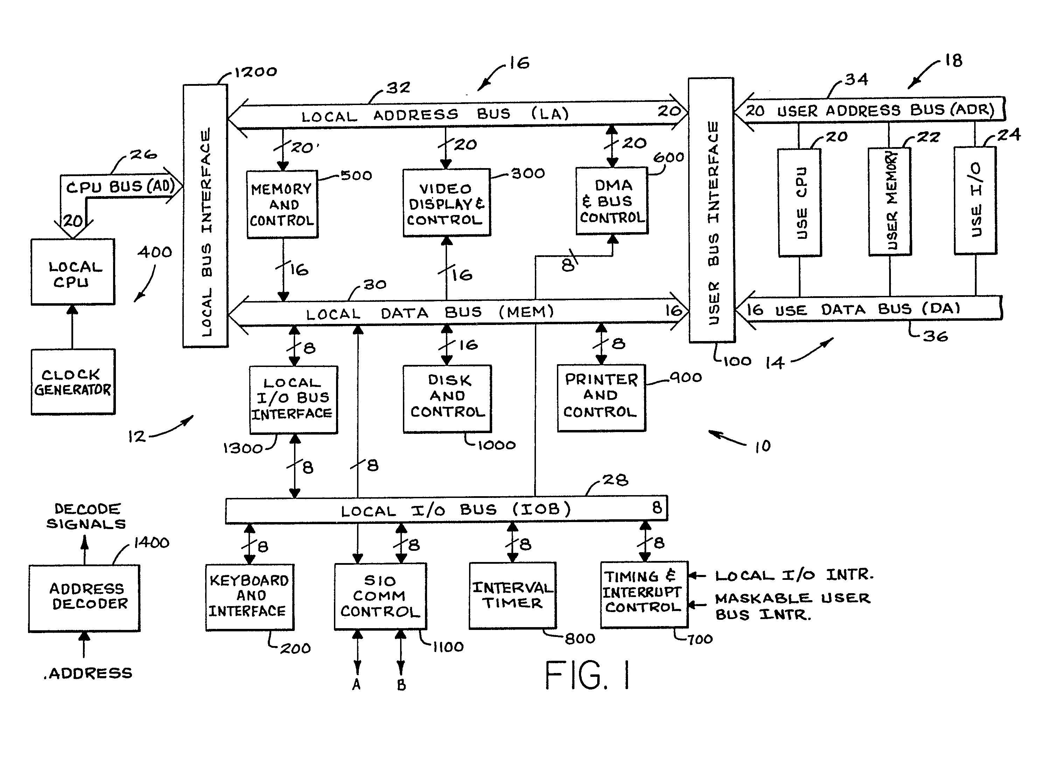

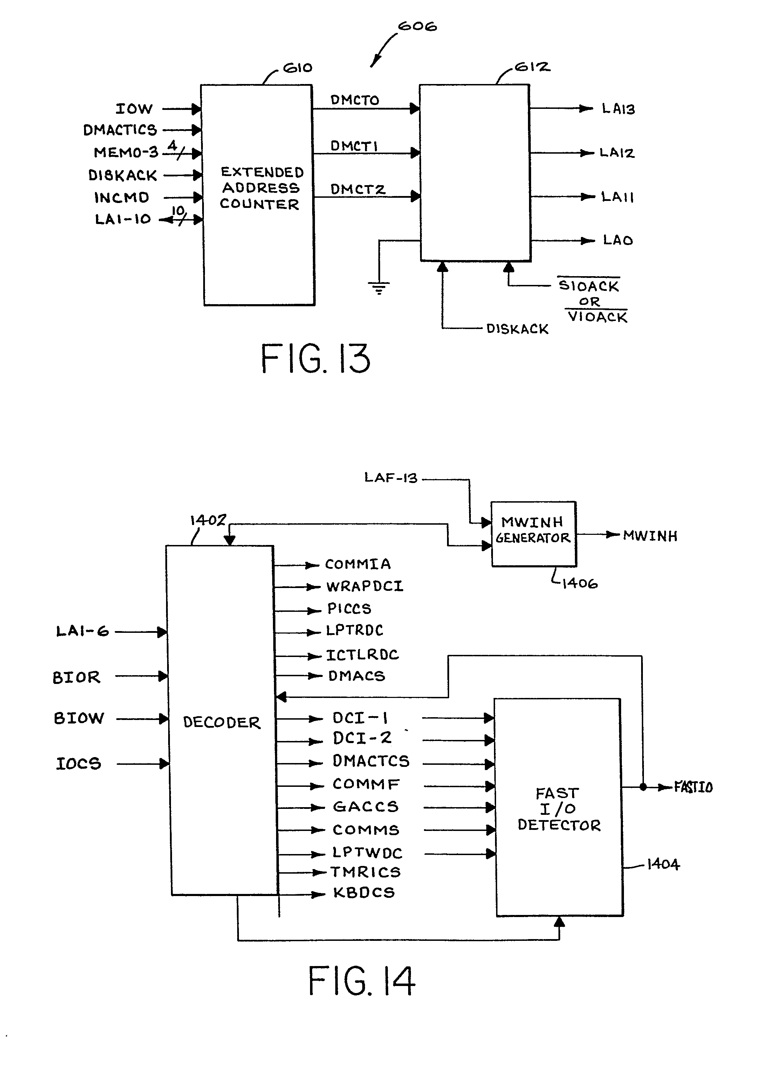

FIGURE 13 is a block diagram of the extended address generator and bussing portion of the DMA illustrated in FIGURE 1 used for the disk resource operation;

FIGURE 14 is a block diagram of the address decoder illustrated in FIGURE 1, showing the address decode control lines and address bussing associated with the address decoder;

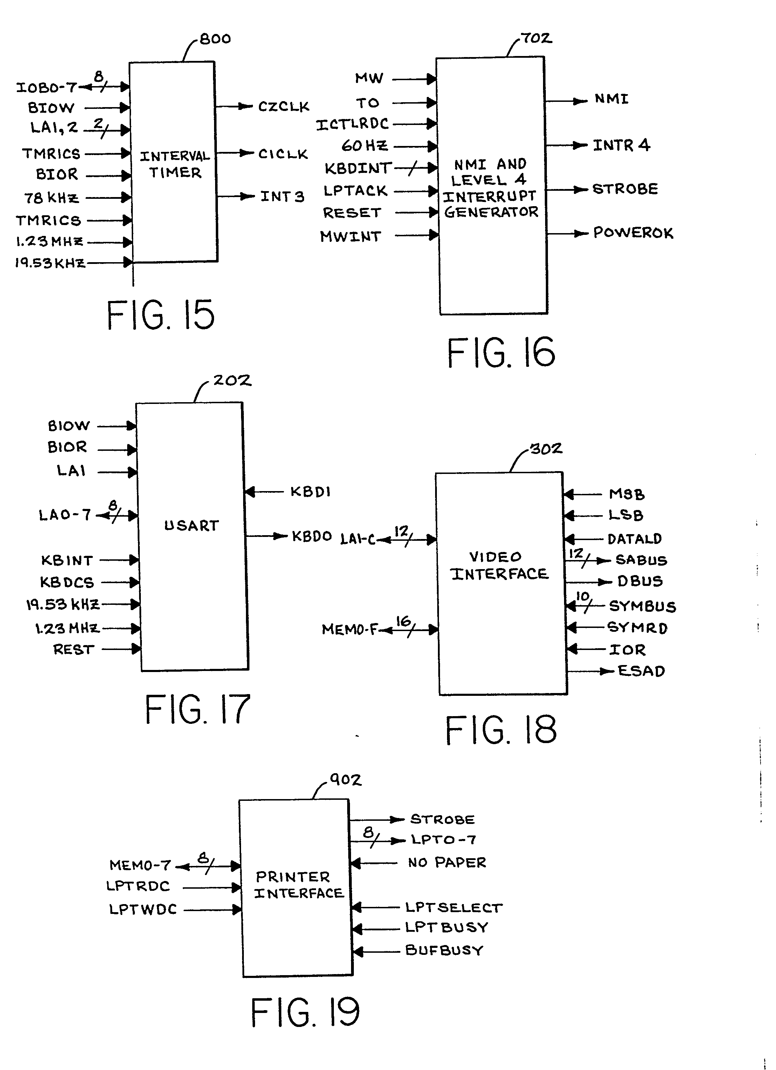

FIGURE 15 is a block diagram of the interval timer illustrated in FIGURE 1, showing the control lines and I/O bussing associated with the interval timer;

FIGURE 16 is a block diagram of the level 4 and non-maskable interrupt and level 4 interrupt generator associated with the system illustrated in FIGURE 1, showing the control lines and data bussing associated with the generator;

FIGURE 17 is a block diagram of the interface portion of the keyboard and interface illustrated in FIGURE 1, showing the control lines and I/O bussing associated with the keyboard and interface;

FIGURE 18 is a block diagram of the interface portion of the video display and control illustrated in FIGURE 1, showing the control lines, address bussing and data bussing associated with the video display and control;

FIGURE 19 is a block diagram of the interface portion of the printer and control illustrated in FIGURE 1, showing the control lines and data bussing associated with the printer and control;

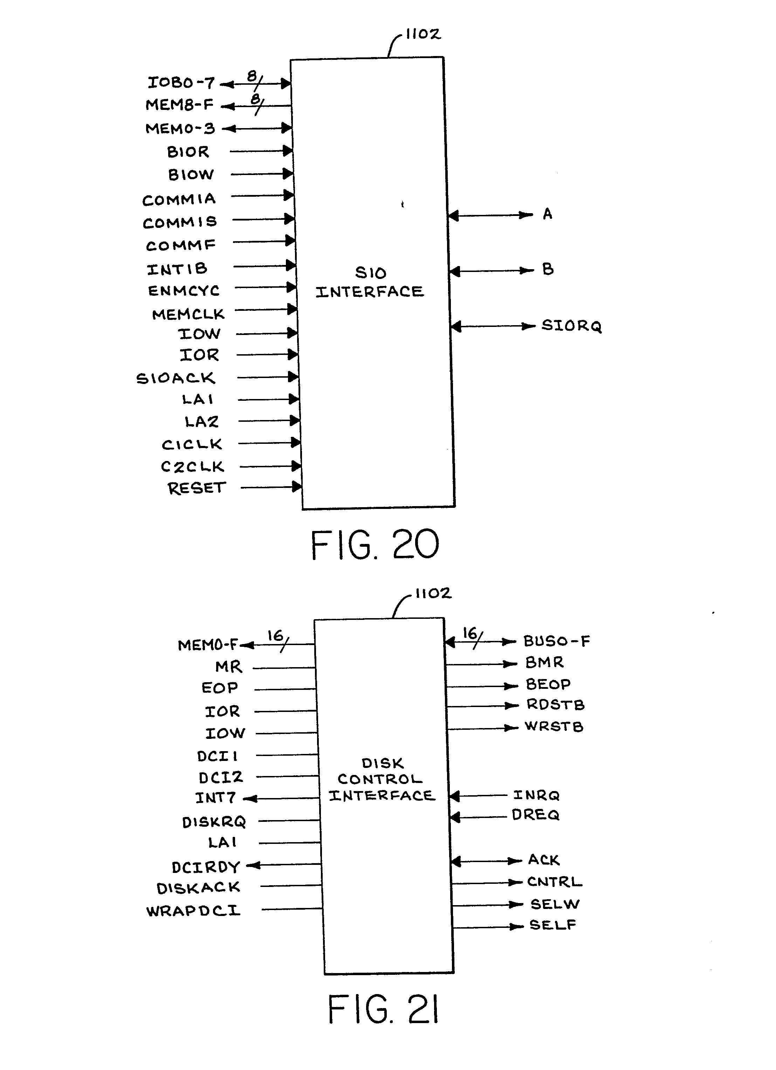

FIGURE 20 is a block diagram of the serial input and output (SIO) communications control illustrated in FIGURE 1, showing the control lines and bussing associated with the SIO communications;

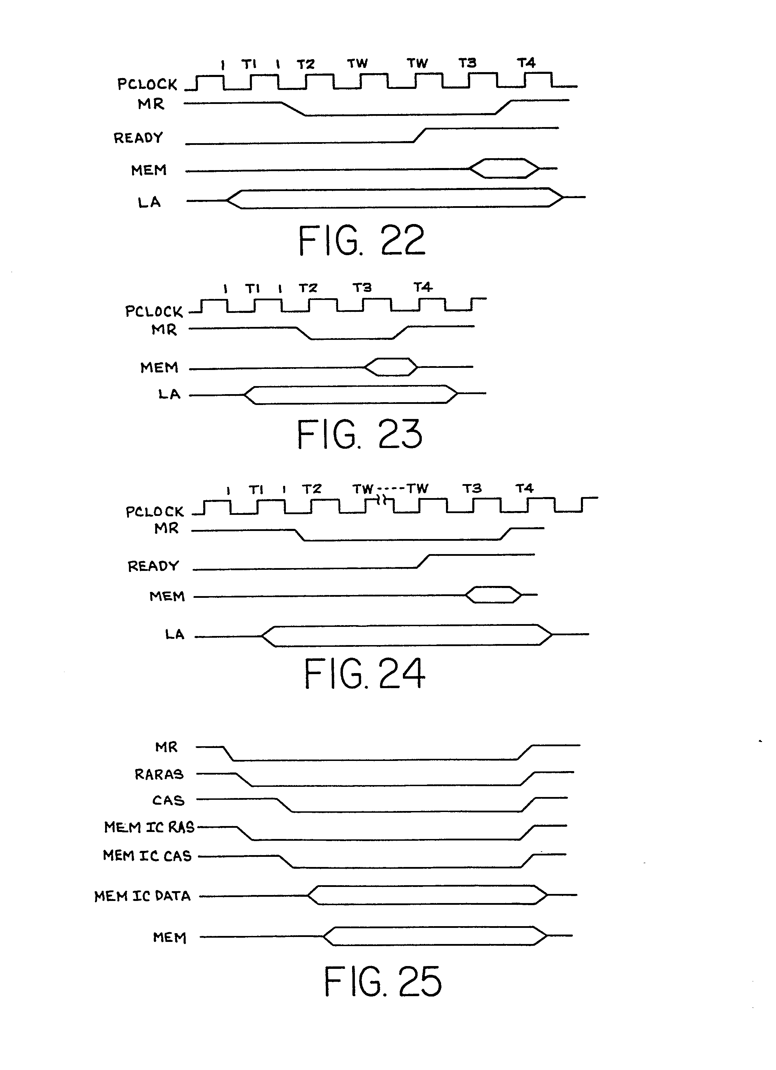

FIGURE 21 is a block diagram of the interface portion of the disk and control illustrated in FIGURE 1, showing the control lines and data bussing associated with the disk and control;

FIGURE 22 is a timing diagram illustrating the CPU timing for PROM memory access;

FIGURE 23 is a timing diagram illustrating the CPU timing for synchronous operations requiring no wait cycles;

FIGURE 24 is a timing diagram illustrating the CPU timing for asynchronous operations requiring an indeterminant number of wait cycles;

FIGURE 25 is a timing diagram illustrating the RAM memory timing;

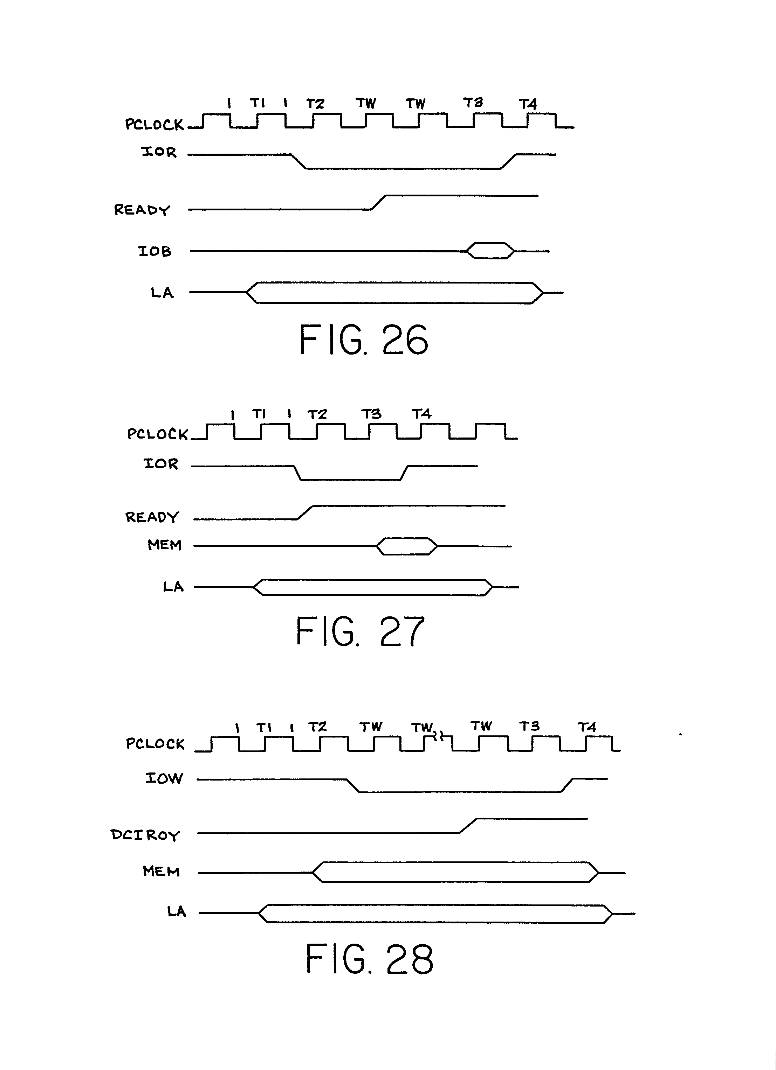

FIGURE 26 is a timing diagram illustrating the CPU timing for I/O bus read data operations;

FIGURE 27 is a timing diagram illustrating the CPU timing for local data bus read data operations;

FIGURE 28 is a timing diagram illustrating the CPU timing for asynchronous local data bus write data operations requiring an indeterminant number of wait cycles;

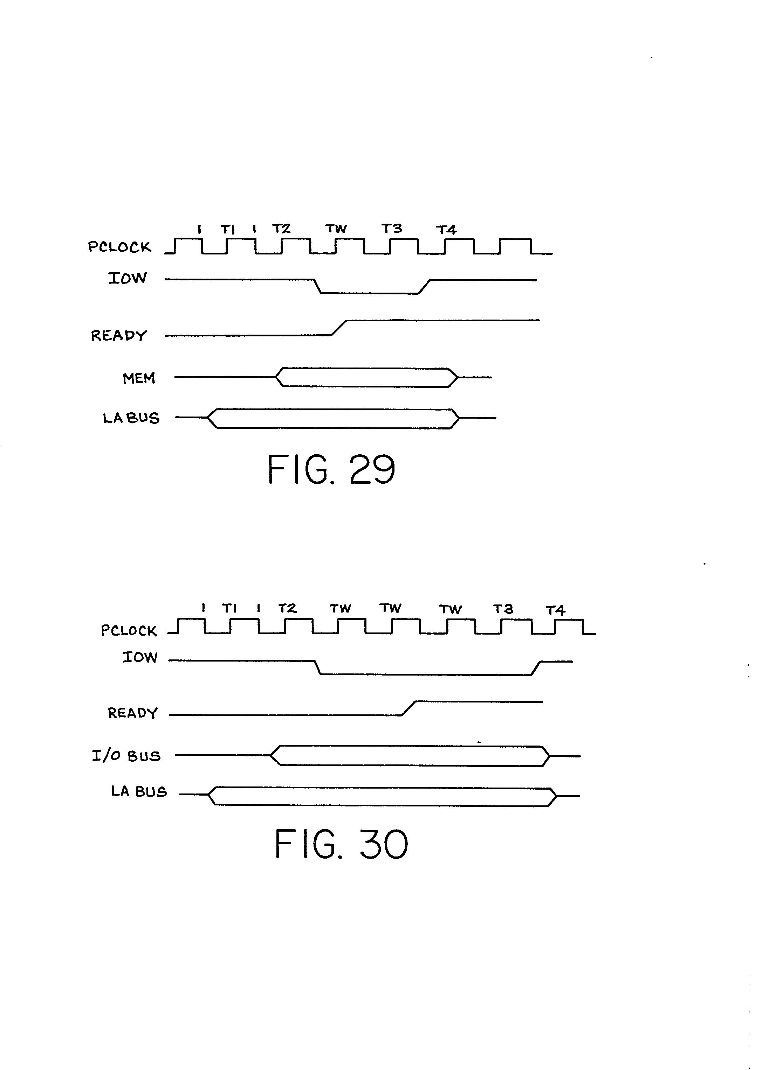

FIGURE 29 is a timing diagram illustrating the CPU timing for synchronous local data bus write data operations requiring a single wait cycle; and

-13-

FIGURE 30 is a timing diagram illustrating the CPU timing for I/O bus write data operations.

The computing data processing system 10 of the present invention will be described in detail with reference to a preferred embodiment illustrated generally in FIGURE 1 that includes a local first computing system 12 and a user second computing system 14 selectively coupled together by a user bus interface 100 that is controllable to permit the two computing systems to operate asynchronously with respect to each, while permitting each computing system to access designated resources of the other computing system. A dual computing system bus structure is employed to communicate the resources for executing data processing operations, one being a local system bus 16 for communicating between local resources and one being a remote or user system bus 18 for communicating between user resources. The local bus system 16 operates asynchronously with and is electrically separate from the user bus system 18 and has its own high-speed protocol for access by the local resources it supports. In the preferred embodiment, the widely used IEEE P796, 86-pin microcomputer system bus structure (Multibus) is selected for the user bus protocol to facilitate the addition of user-designed resources to the data processing system 10. Furthermore, the preferred embodiment of the data processing system 10 is arranged to provide operator access and interface via a keyboard 200 and video display 300 I/O resources.

As will be appreciated from the following description, however, the data processing system 10 of the present invention is not restricted to configurations having an independent user computing system 14 on the user system bus 18. The organization of the data processing system 10 of the present invention permits the local computing system 12 to execute data processing operations independently of the user system resources, regardless of the presence or absence of user resources. Therefore, a user may employ the user system bus 18 to communicate to the local computing system 12 one or more user computing system 14, such as user CPU, memory and I/O resources 20, 22 and 24, respectively. Alternatively, the user may elect to use the data processing system 10 with only non-user CPU controlled resources, as long as such resource is capable of being accessed through the user system protocol.

Neither is the data processing system 10 restricted to employing a user bus architecture based upon the aforementioned Multibus protocol. However, it is preferred to conform the architecture of the user bus 18 to a widely used protocol to facilitate the addition of user-designed resources to the data processing system 10. The Multibus protocol is preferred because there are in excess of one hundred manufacturers of devices operating according to that protocol.

While the preferred embodiment of the data processing system 10 is arranged to provide operator access and interface via the keyboard 200 and video display 300, other I/O resources according to the data processing needs of the operator may be used for that purpose. As mentioned hereinbefore and will be described in further detail hereinbelow, the data processing system 10 of the present invention permits any user resource capable of functioning according to the protocol of the user system bus 18 to be communicated to the local computing system 12. Therefore, user-designed I/O resources other than keyboards and video displays may be employed to provide indirect operator access and interface to the local computing system 12 via undedicated local resources. Moreover, the local computing system 12 itself can be adapted to provide direct operator access and interfacing through I/O resources other than the keyboard 200 and video display 300. However, adapting the local computing system 12 to direct operator access and interfacing through different I/O resources requires modification of the local control logic and programming to retain the advantageous high speed protocol characteristics. As will be described in further detail hereinbelow, the advantageous high speed protocol of the local computing system 12 is achieved through direct priority-resolving methods, in contrast to the bus-request/bus-acknowledge protocol characterizing the Multibus protocol of the user computing system 14. A change in the direct operator access and interface I/O resource is likely to necessitate a change in the priority structure in order to maintain system operating efficiency and, most certainly, a rearrangement of the local control logic and programming to service the different direct operator access and interface I/O resource.

The preferred embodiment of the computing data processing system 10 illustrated in FIGURE 1 is arranged to execute data processing operations through a configuration of local resources providing a user flexibility in interacting with the system. However, all resources included in the preferred embodiment are not required for minimum system operation. In any use, the local computing system 12 will include the following local resources: a processor 400, memory and control 500, DMA and bus control 600, interrupt control 700 and interval timer 800. DMA and bus control 600 will sometimes be referred to hereinafter as DMA to facilitate the description. If direct operator access is to be provided to the local computing system 12, the keyboard and interface resource 200 and the video display and control resource 300 is included. A hard copy output from the local computing system 12 can be obtained directly from the system with a printer and control resource 900. Additional off-line memory can be provided directly to the local computing system 12 by including a disk and control resource 1000. Serial communications to external sources is possible by the addition of a two-channel A and B serial input/output (SIO) communications control resource 1100. For example, several local-type computing systems 12 may be linked together via a communication channel. Regardless of the configuration selected for the data processing system 10, the local computing system 12 will include a local bus interface 1200 that couples a CPU bus 26 (AD) of the processor 400 to the local system bus 16.

To achieve high speed and drive operations, bipolar TTL (transistor-transistor logic) devices are employed in constructing those resources which significantly influence the speed of operation of the local computing system 12. However, resources not significantly influencing the speed of operation of the local computing system 12 can be constructed with slower and less expensive MOS (metal oxide semiconductor) devices. For configurations using such resources, a shared local I/O bus interface 1300 is provided for coupling a local I/O bus 28 (IOB) to the local data bus 30 (MEM) of the local system bus 16. As will be explained in further detail hereinbelow, the local system bus 16 incudes a local address bus 32 (LA), the local data or MEM bus 30 and several control lines, not shown in FIGURE 1. For configurations of the local computing system 12 employing MOS-based resources, the local system bus includes the local I/O or IOB bus 28 as well. The local address or LA bus 32 is coupled by the local bus interface 1200 and by the user bus interface 100, respectively, to the CPU or AD bus 26 and a user address bus 34 (ADR) of the user or Multibus bus 18 (MB). The local data or MEM bus 30 is coupled by the local bus interface 1200 and by the user bus interface 100, respectively, to the AD bus 26 and a user data bus 36 (DA) of the MB bus 18. While not illustrated in FIGURE 1 for clarity of illustration of the architecture of the computing data processing system 10, the system buses include appropriate interfacing devices for communicating the required control signals between the resources operatively associated with the different system buses, namely the CPU bus 26, local system bus 16 and user bus 18. The control lines and signals will be described hereinbelow, however, with reference to the other figures of the drawings.

Having given an overview of the architecture of the computing data processing system 10 of the present invention, a detailed description of the preferred embodiment of the data processing system will now follow. Referring again to FIGURE 1, the local computing system 12 contains a bus structure which incorporates two sets of system buses, the local system bus 16 and the user bus 18. The local system bus 16 links the entire local computing system 12 and includes a 20-bit local address bus 32, a 16-bit local data bus 30, plus several control lines, and, as a subset, the CPU bus 26, a collection of 20 time-multiplexed address/data lines, plus several control lines. The IEEE 796 protocol user bus 18 is provided for user-added resources and, like the local system bus 16, includes a 20-bit user address bus 34, a 16-bit user data bus 36 and several control lines. A definition of the IEEE 796 protocol user bus 18 for interfacing purposes can be had by reference to the IEEE document entitled "Proposed Microcomputer System Bus Standard (P796 Bus)", published by the IEEE Computer Society Subcommittee Microcomputer System Bus Group, September 1980. Hexidecimal notation is used hereto to identify address and bus lines unless otherwise noted.

The CPU bus 26 subset of the local system bus services only the processor 400, which uses address/data multiplexing. The local bus interface 1200 functions to demultiplex and latch the lines of the CPU bus 26 for convenient use by other resources attached to the local system bus 16 and the user bus 18.

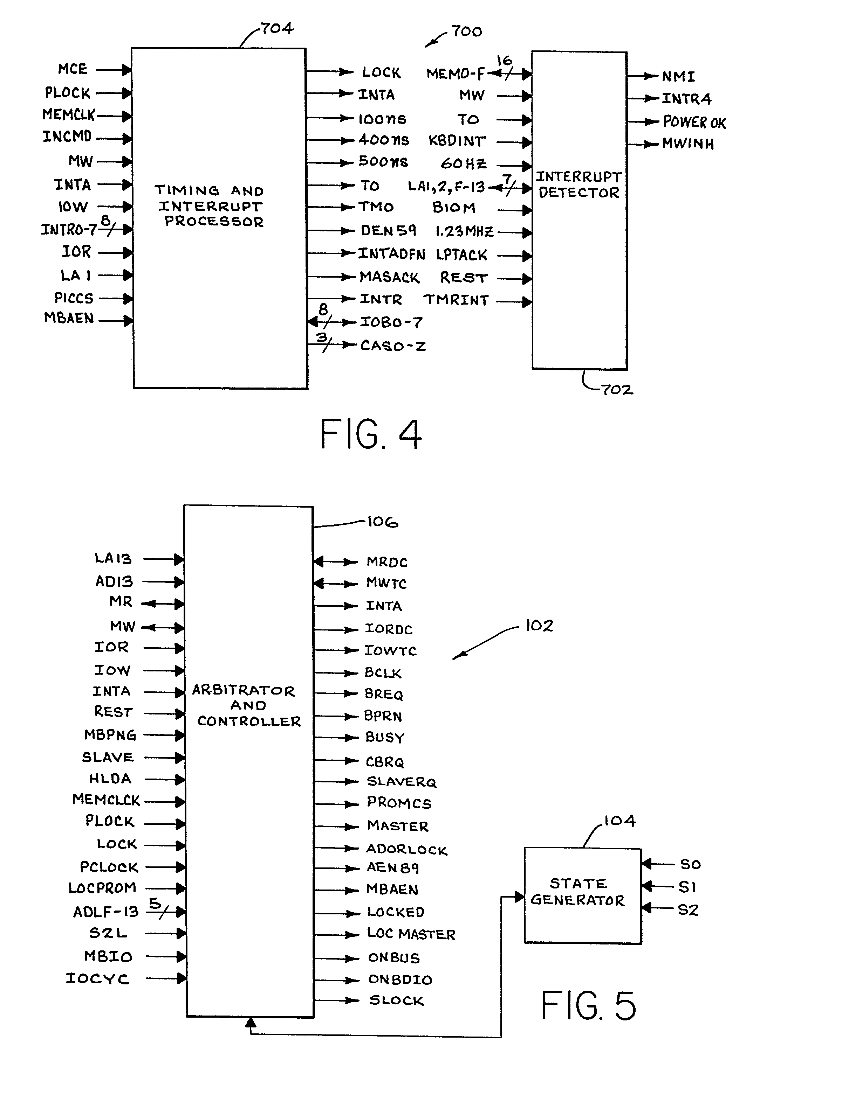

The local system bus 16 services all of the memory and other resources comprising the local computing system 12. The 20-bit local address bus 32 carries addresses provided by the processor 400 through the local bus interface 1200, the DMA 600, or a user resource provided through the user bus interface 100. In the preferred embodiment of the data processing system 10, all local resources, except a first window of certain memory addresses, are dedicated to use by only the local computing system 12 and, therefore, are not accessible by the user computing system 14. Access is prevented at the user bus interface 100. More specifically, the user bus interface 100 includes a user bus control 102 (FIG. 5) that is responsive only to addresses placed on the user address bus 34 identifying local resources to grant the requesting user access to locations in the local memory falling within the first window. The user bus control 102 is incapable of granting such access to other user-supplied addresses. By assigning addresses outside the first window to all other local resources, such resources are protected against access by user resources.

Since local addresses in the first window are reserved to certain local memory resources, the user resources must be assigned addresses in the local system 12 outside that range, if such resources are to be accessible by the local computing system 12. In the preferred embodiment of the data processing system 10, local addresses in a second window different from the first window are assigned to identify user resources that are to be accessible to the local computing system 12. Again, the user bus control 102 is responsive to addresses in the second window placed on the local address bus 32 by the processor 400 to grant the local computing system 12 access to the user resource. It will be appreciated that user resources can be similarly protected against access by the local computing system 12, if desired, by assigning to such protected user resources addresses outside the aforementioned second window.

The 16-bit local data bus 30 connects the CPU bus 26, as demultiplexed for data transfers, with the various local resources coupled thereto, as well as the user data bus 36 through the user bus interface 100.

The 8-bit local I/O bus 28 is buffered off of the local data bus 30 by the local I/O bus interface 1300 to service MOS-based devices, including the DMA logic, interrupt control 700, the interface portion 202 (FIG. 17) of the keyboard and interface 200, the interval timer 800 and the SIO communication control. The entire local I/O bus 28 is dedicated to local resources and has no interface with and cannot be addressed by the user computing system 14.

The memory 500 includes RAM and PROM sections. The PROM memory section contains the bootstrap program located outside the aforementioned first address window to be protected against access by the user computing system. The RAM memory section contains the interrupt table, the operating system and the I/O buffers, all of which are located outside the aforementioned first address window and, therefore, protected against access by the user computing system 12.

In the preferred embodiment of the computing data processing system 10, the processor 400 is centered around a model 8086 microprocessor manufactured by Intel Corporation. Semiconductor RAM devices are used to construct the RAM memory section of the memory 500 and is organized in the standard 8086 format of high-byte bank and low-byte bank, which allows either 8-bit byte or 16-bit word accesses. (Word accesses by the processor may have even or odd addresses on either the local system bus 16 or the user system bus 18; the only distinction is that odd addressed word accesses cause two bus cycles instead of one. For DMA transfers on the local system bus, however, only word transfers are made; the bit zero address line, LAO, is forced to zero. For transfers from the local data bus 30 to the local I/O bus 28, only the lower byte is seen by the latter bus.) No wait states need be provided to the bus cycle when running a 5MHz RAM. Access time for the PROM memory section of the memory 500 is 500 nanoseconds (nsec) and three wait states are normally added to the bus cycle for 5MHz processor clock. Refreshing of the semiconductor RAM devices is done so as not to interfer with non-RAM bus accesses, but it does take precedence over RAM accesses from other resources. A refresh rate of 78kHz is employed, which represents only about 5% of the memory bandwidth, during which the RAM memory is unavailable for other uses.

While the local processor 400 ultimately controls all activity on the local system bus 16 and any activity on the user system bus 18 related to transfers between the two data processing systems across the user bus interface 100, much of the input and output transfers with respect to the local system bus is controlled by the DMA 600. The following table designates the local system bus control during specified data transfer operations.

| Type of Transfer | Local Bus Control |
| --- | --- |
| Video | DMA |
| Disk | DMA |
| Communication | DMA* or CPU |
| Keyboard | CPU |
| Printer | CPU |
| User System | CPU or DMA |

* For RS-422 protocol channels only

Access to the local system bus 16, however, is determined by priorities established at the DMA 600. The processor 400 maintains software control over the priorities by having the ability to write mask bits to the DMA's mask register, thereby enabling or disabling individual resources from requesting service. In all cases of requests for access to the local system bus 16, however, memory refresh always takes priority over a DMA transfer request for access to RAM memory. The normal priorities for access to the local system bus 16, from highest to lowest, are as follows:

1.  User system 18 accesses to local memory 500. The local DMA 600 arbitrates access, but the user master controls the transfer.

2.  Channel A communications access to and from local memory 500. (Channel B communications are not serviced by the DMA 600 and have a priority of 5 because it uses the processor 400 for transfer control.)

3.  Disk accesses to and from local memory 500.

4.  Video-refresh accesses from local memory 500.

5.  Local processor 400 use of the local system bus 16, in which the processor 400 generates addresses.

The user computing system is given highest priority because it is assumed that some user resources, such as realtime devices, will not have their own storage buffering and will require very fast access across the user bus interface 100. All local resources, by contrast, have their storage buffering and can wait longer for local system bus access, if necessary. When the requested local system bus usage involves memory there are two levels of contentions involved: the first level is for the bus itself and the second is for the memory. It is at this second level of contention that memory refresh always has priority over the bus masters.

As discussed hereinbefore, the CPU bus 26 and the local system bus 16 operate in an intimately linked protocol, whereas the local and user system buses 16 and 18 operate asynchronously. The asynchronous separation between the local system bus 16 and the user system bus 18 is done to achieve three objectives: local computing system data processing speed, protection of the local computing system 12 from unauthorized interaction with the user computing system 14 and simultaneous processing by the local and user computing systems with selective interaction between them. The local system 16 can be in three different states: idle, i.e., the bus is not being used; CPU active, i.e., the local processor 400 is using the local system bus for an input or output, interrupt acknowledge or memory cycle, with addresses originating with the processor; or DMA active, i.e., the DMA is using the local system bus for one of the aforementioned data transfers. The entire system 10 can be in one of three states as follows: master, i.e., the local system bus 16 is master over the user system bus 18 and is driving its command and address signals; slave, i.e., the local system bus 16 is slave to the user system bus 18 and its command and addresses are driven by the user system bus; or independent, i.e., the local and user system buses operate independently without interaction. From the foregoing, it will be appreciated that the local system bus 16 has three possible masters; the processor, DMA and user computing system 14. Furthermore, the local processor 400 can function as a master of the user system bus 18. Either the DMA or a user system bus master can use the local system bus 16 between CPU bus cycles, during non-bus CPU cycles or when the processor 400 is waiting for access to the user computing system resources.

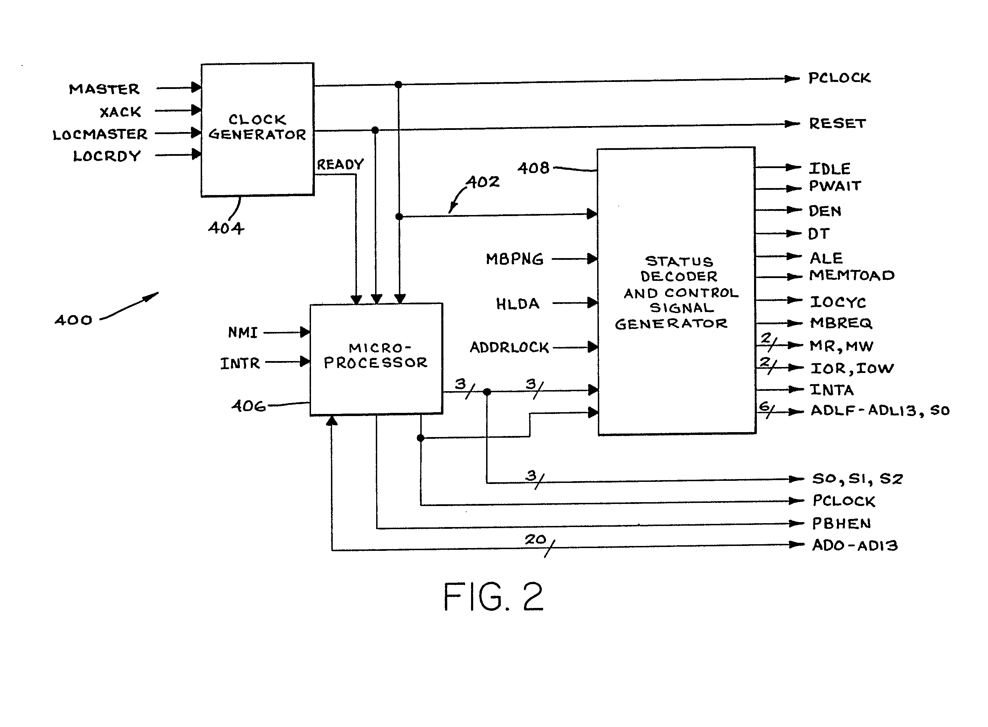

Reference is now directed to FIGURES 1 and 2 for a detailed description of the processor 400, which comprises a CPU 402 and clock generator 404. The CPU 402 includes the model 8086 microprocessor 406 and a status decoder and control signal generator 408, the latter being centered around the model 8288 bus controller manufactured by Intel Corporation. The clock generator 404 provides clock generation and reset synchronization for the processor 400 and is implemented by a model 8284 clock generator manufactured by Intel Corporation. It supplies a 33% duty cycle processor clock, PCLK, system reset and ready signals. The ready signal is provided to the microprocessor 406 when the required bus cycle needed for the processor 400 is completed, namely, either IOR, IOW, MR, MW or INTA, is complete. The ready signal is generated from two sources; user system bus 18 and local system bus 16. For the user system bus master modes of operation the LOCMASTER signal is inactive and the MASTER signal is active. This causes the clock generator to ignore the LOCRDY signal and generate the ready signal in response to the XACK signal, the user system bus acknowledge or ready signal.

Each time the processor 400 issues a bus command, the microprocessor waits for its ready input to go active before completing the command. This facility is used to stretch the commands, i.e., add wait states, for resources that are slower than the minimum access time of the microprocessor 406 and for devices not ready to transfer.

No wait states are required when the processor is executing internal cycles and between bus cycles (see the timing diagram of FIG. 23, which illustrates a MR local data bus cycle) and when a TTL type I/O resource, which does need wait states, is addressed, for example, the disk resource 1000 in the IOR mode, during which it sends data to the local computing system 12 (see the timing diagram of FIG. 27, which illustrates an IOR local data bus cycle).

Predictable wait intervals are required for the execution of many bus command cycles. FIGURES 22, 26, 29 and 30 illustrate examples of such cycles . FIGURE 22 illustrates a MR local data bus cycle for PROM access, FIGURE 26 illustrates an IOR local I/O bus cycle, FIGURE 29 illustrates an IOW local data bus cycle and FIGURE 30 illustrates an IOW local I/O bus cycle. In the preferred embodiment of the present invention, the number of wait states is held low by allowing the control system of the local computing system to look ahead in its processing of an instruction to anticipate when a needed bus will become free. Both local system bus masters, namely, the processor 400 and DMA 600 do this. For example, the DMA receives a signal, PRACK, when the RAM portion of the memory 500 is about to complete its cycle. Certain bus cycles will require an indeterminant number of wait states and the aforementioned looking-ahead expedites completion of the bus cycle. The timing diagrams of FIGURES 24 and 28 illustrate operations involving an interval of indeterminant wait states. FIGURE 24 shows a MR local data bus cycle and FIGURE 28 an IOW local data bus cycle.

For non-RAM bus cycles, the timing and interrupt control 700 (FIG. 4) provides timing signals to the DMA 600 at designated intervals following the issuance of a bus command. The LOCRDY signal generation for PROM accesses is enabled by the PROMCS signal, which signifies that the PROM portion of the memory 500 has been selected for access. The LOCRDY signal is generated 500 nsec following issuance of the MR bus command and requires two wait states before the processor 400 can complete the command. The timing diagram of FIGURE 22 illustrates this operation. When the local I/O bus 28 is used for input and output bus cycles, LOCRDY is asserted 400 nsec following the issuance of the bus command. For IOR bus commands, two wait states are required to complete the command, while three wait states are required for IOW bus commands.

The timing and interrupt control 700 also detects bus timeouts, i.e., a set interval following the issuance of a bus command that expires before execution of the command by the processor 400 is resumed in response to the receipt of a ready signal. The timeout signal, TO, is sent to the DMA 600, which causes the LOCRDY signal to be sent to the clock generator 404 for issuing another ready signal to the microprocessor 406, as previously described. In the preferred embodiment of the present invention, a timeout interval of 6 milliseconds (msec) is selected. The timeout prevents the data processing system 10 from being locked in a bus command cycle as a result of the processor 400 not receiving a response to the issuance of a bus command.

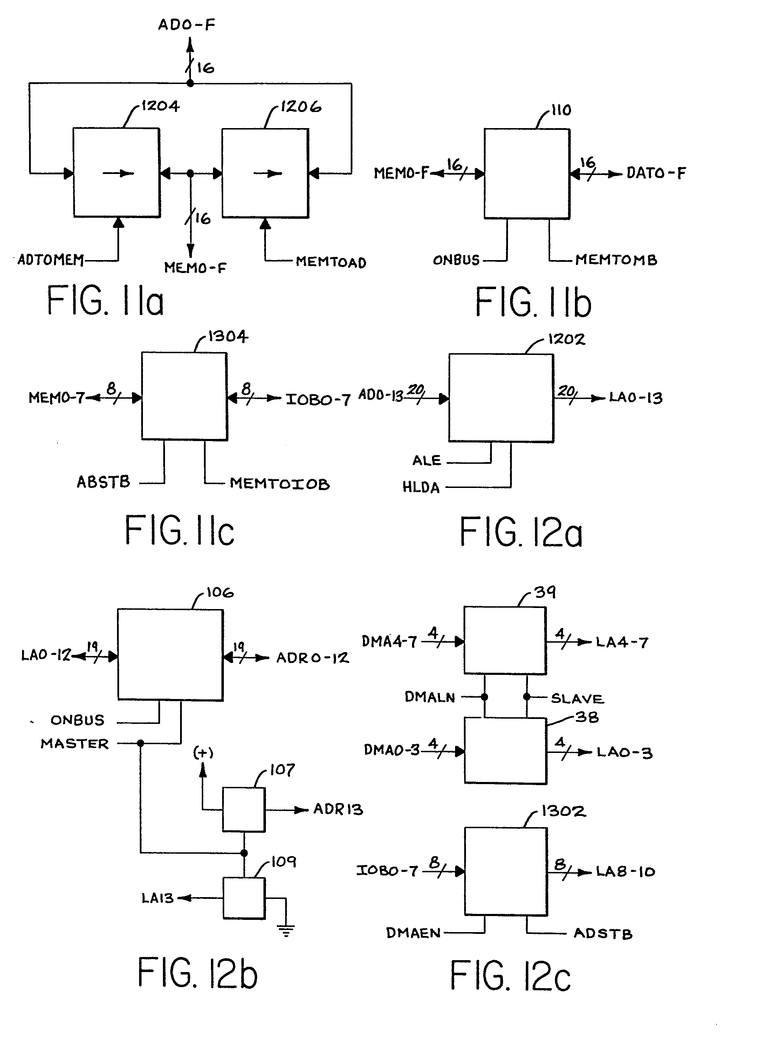

The microprocessor 406 couples the three status signals SO, S1 and S2, to the status decoder and control signal generator 408. The three status signals form a 3-bit binary word providing up to 8 status conditions. The decoder/generator 408 decodes the status represented by the status signals into commands for the local system bus and other bus control functions. Included in the commands are the aforementioned bus commands. In addition, decoder/generator 408 generates an ALE signal to indicate when the multiplexed address/data lines of the CPU bus 26 contain status and address information as opposed to data. Addresses from the processor 400 are driven onto the local address bus 32 from the CPU bus 26 by drivers 1210 (FIG. 12A) of the local bus interface 1200 controlled by the ALE and HLDA signals.

The DEN signal signifies that data is on the CPU bus 26. The DT signal indicates that the data is going from the processor 400 to the local data bus 30. Depending on the direction of data transfer, one of the drivers 1204 or 1206 is enabled for effecting the transfer.

When the processor 400 does not have control over the local system bus 16, a PWAIT signal is issued by the decoder/generator 408. This occurs when the decoder/generator receives at its input either the HLDA signal (indicating DMA activity) or the MBPNDG signal (indicating the processor 400 is waiting to obtain access to the user system bus 18) from the DMA 600.

Various cycles are also decoded by the decoder/generator 408. The IOCYC signal is active when an I/O cycle is in progress. The MBREQ signal is active whenever a user bus cycle is requested. The idle signal signifies when the processor 400 is executing internal cycles and not using the local system bus 16, as described hereinbefore. The idle signal is cleared asynchronously if the status of the processor 400 ever goes to one of the system interactive states. It is also cleared when the decoder/generator 408 receives a PLOCK signal from the microprocessor 406, which indicates a lock cycle is in progress.

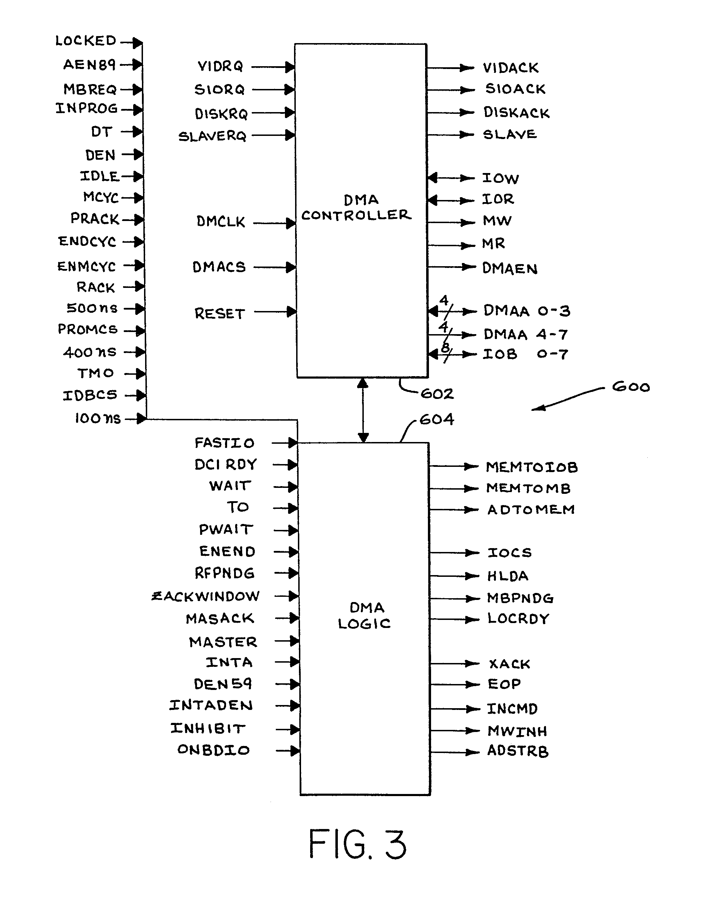

Reference is now directed to FIGURES 1 and 3 for a detailed description of the DMA 600. The DMA performs two functions: arbitrates priority and services direct memory transfers. When data is transferred with respect to the user system bus 18, either the local processor 400 or DMA 600 is used. The operation of the DMA 600 is controlled by local processor 400, which writes commands and reads status with respect to the DMA 600 through an 8-bit data path via the low byte of the local data bus 30 to the local I/O bus 28. The commands include processor-initiated requests for DMA service, starting addresses, transfer block lengths, and enable/disable bits which mask the ability of individual local resources to request their own DMA service. The control lines in and out of the DMA 600 are used for local system bus request/acknowledge, I/O resource request/ acknowledge, and ancillary register and buffer control. The memory resource and I/O resource read/write commands are generated by the DMA 600 and distributed through the local I/O bus interface 1200. Then, the DMA 600 generates addresses for the RAM portion of the memory 500 on the local address bus 32 and transfers of data occur on the local data bus 30. Transfers always have RAM memory at one end of the path, either at the source or the destination. Memory-to-memory, I/O-to-I/O and PROM memory accesses are not supported under DMA control.

Referring to FIGURE 3, the DMA 600 comprises a DMA controller 602, centered around Intel Corporation's model 8237-2 DMA controller, and supporting DMA logic 604. The 8237-2 DMA controller 602 has 8-bit data and address paths, but is arranged to use the paths together to allow the generation of 16-bits of address. An additioal 3 bits of address are generated by an external extended address generator 606 portion (FIG. 13) of the DMA 600 for transfers with respect to the disk 1000. All DMA transfers are words. Consequently, the least-significant address bit is always forced to zero for DMA transfers. A simultaneous transfer scheme is employed in which data is read from the source in essentially the same transfer cycle in which it is written to the destination. Depending on the DMA mode, address and resource involved in the transfer, the transfer cycle varies between three and six cycles. The length of a particular transfer cycle can be determined by reference to the timing diagrams of FIGURES 22 - 24 and 26 - 30. DMA transfers within the local computing system 12 use either single, word-at-a-time or the demand transfer mode, depending on the channel involved in the transfer. When the demand mode is used, bursts of multiple-word transfers within a single DMA-request cycle occur. DMA activity that is led by a user resource only uses the single transfer mode, because there is no way to communicate a block length across the user bus interface 100. Therefore, all DMA transfers across the user bus interface 100 are subjected to interlacing with other local processor or DMA controlled transfers on the local system bus 16.

The DMA 600 is initialized and monitored by the processor 400 through the local I/O bus 28. The processor 400 addresses the DMA 600 over the four bidirectional lines LAO-3 of the local address bus 30, the four bidirectional lines being coupled to the corresponding four bidirectional lines DMAAO-3 of the DMA by the driver 38 (FIG. 12C). For other addressing purposes, driver 38 cooperates with driver 39 to drive LAO-8 lines of the local address bus 32. Data transfers are caused to be executed when the DMA resource select line, DMACS, is active by asserting the IOR (read) and IOW (write) signals. Registers are included in the DMA controller 602 for conventional initialization and monitoring purposes. Of the four prioritized channels provided in the DMA 600 for non-local processor devices, only three are programmed by the processor 400 with base addresses and counts. The user bus channel is not so programmed, because the DMA 600 is used only for arbitrating access in the user system access mode. The registers included in the 8237-2 DMA controller 602 for the other three channels and used for DMA activity are the current address register (holds value for the address during DMA transfers and is changed after each transfer), current word count register (holds the number of transfers to be performed and is decremented to zero as transfers are performed), base address and base word count registers (hold the original values of their associated current registers for autoinitialization purposes), command register (controls operation of the DMA 600), mode register, 4-bit mask register (any one or more of the bit locations may be set to disable the four DMA request lines, namely, VIDRQ, SIORQ, DISKRQ and SLAVERQ), and status register (contains information about the current status of the prioritized resources). When no resource is requesting DMA service, the idle mode, the DMA controller 602 will sample the DMA request lines and the DMA resource select line, DMACS, every clock cycle to determine if any resource is requesting a DMA service, including the processor 400 for purposes of accessing the DMA registers. If a prioritized resource requests DMA service during the idle mode, the DMA will issue the HLDA signal to the processor 400 to inhibit it from issuing commands for exercising control over the local system bus 16 until the requested DMA cycle is complete. The HLDA signal is also coupled to the tri-state latches 1202 (FIG. 12B) forming the address interface portion of the local bus interface 1200 to disable address transfers between the processor 400 and the local system bus 16. For a single or word-at-a-time transfers, the DMA 600 will permit one transfer only. The word count stored in the current word count register is decremented and the address stored in the current address register changed appropriately following each transfer. For multiple-word transfers, which are used for all DMA transfers involving local resources, the DMA continues making transfers until either the word count goes to zero, an external end of process signal is received or the applicable DMA request line goes inactive.

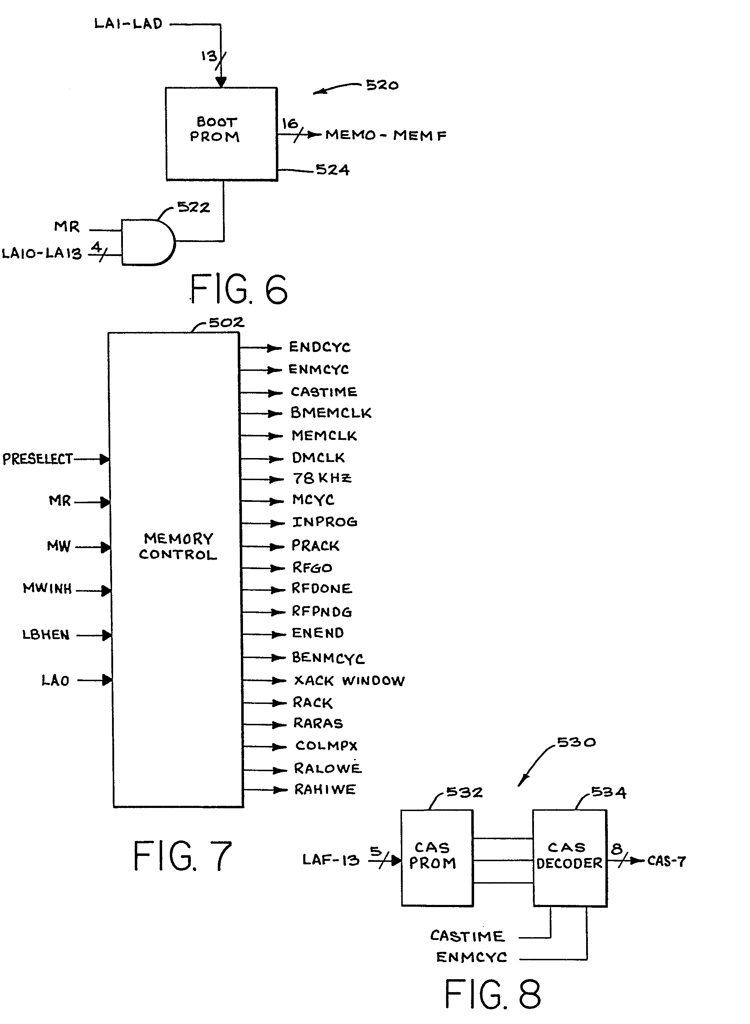

The DMA 600 operates with respect to the DMCLK clock signal generated by the main memory control portion 502 (FIG. 7) of the memory 500. When a request for DMA service is received by the DMA controller 602 from a prioritized resource, a DMA cycle starts. If the local system bus 16 is available for executing the DMA service, the DMA 600 issues the aforementioned HLDA signal. The HLDA signal will not be issued if a LOCKED signal is received from the user bus control portion 102 (FIG. 5) of the user bus interface 100, which indicates a locked cycle is in progress. It will be issued if the processor 400 is waiting for a user master status (signified by the MBPNDG signal) or is not using the local system bus 16 (signified by the idle signal). The HLDA signal inhibits commands from the processor 400 until the DMA cycle is completed. In addition, the HLDA signal is coupled to the user bus control 102, which responds by setting the LOCMASTER signal provided to the processor 400 inactive so that a ready signal will not be issued to the microprocessor 406 (FIG. 2). The user bus control 102 also employs the HLDA signal to inhibit master PROM access modes during the DMA transfers by holding the master and PROMCS signals in the inactive state. Also, the IOCS and the ADTOMEM signals are forced inactive. The inactive IOCS signal inhibits address decoding by the processor 400. The inactive ADTOMEM signal disables the local data bus drivers 1204 and 1206 (FIG. 11A) forming the data interface portion of the local bus interface 1200 used to drive data onto the local data bus 30. The drivers 1206 of the local bus interface 1200 used to drive data onto the CPU bus 26 are inhibited by virtue of the processor 400 being inhibited from issuing commands, including the MEMTOMB driver enabling signal. Thus, data transfers through the local bus interface 1200 are inhibited.

The DMA 600 then takes control of the local system bus 1200 and sends out the appropriate addresses over its DMAA and IOB lines. The high-order eight bits of the DMA address communicated by the IOB lines and only if they are different from those of the preceding cycle. In such event, the DMA 600 drives new address bits on lines IOB0 - IOB7 of the local I/O bus 28 and issues the address strobe signal, ADSTB, to the driver 1302 (FIG. 12C) and bidirectional driver 1304 (FIG. 11C) of the local I/O bus interface 1300. The driver 1302, enabled by the DMAEN address enable signal, responds by latching the address to the local address bus 32. Since the local I/O bus 28 is used to transfer address information for this, and other DMA activities, the ADSTB signal is employed to disable the bidirectional driver 1304 and isolate the local I/O bus 28 from the local data bus during such transfers. In the absence of the disabling ADSTB signal, the bidirectional driver 1304 transfers data between the local data and I/O buses in a direction determined by the MEMTOIOB signal received from the processor 400.

Following the addressing, and assuming the requested DMA cycle is not for a slave mode, i.e., the local computing system 12 is not controlled by the user computing system 14, the DMA provides the appropriate memory read and write and the I/O read and write commands, namely, MR, MW, IOR and IOW. If the requested DMA cycle is for a slave mode, then the address and commands are supplied to the local computing system 12 by the user computing system 14, as previously described.

The 8237-2 DMA controller 602 employed in the preferred embodiment is designed to generate only 16 bits of address information, whereas the local address bus has a 20-bit address space. For disk DMA cycles, a 20-bit address is required because of the address protocol typifying such resources. To accommodate such resources an extended address generator 606 (FIG. 13) is provided. The generator includes a 3-bit counter 610 which is responsive to the DMA counter select signal, DMACTCS, provided by the I/O address decoder 1400 (FIGS. 1 and 14) and the IOW command to be loaded from the local data bus 30. The counter is enabled by the disk acknowledge, DISKACK, and input-on-local-bus, INCMD, signals. The counter 610 is coupled to the 16 lines of the local address bus 16 to be incremented one count each time the address on the local address bus crosses the 128K boundary during a disk DMA.

The outputs of the counter 610, namely, DMCTO, DMCT1 and DMCT2 are coupled to a local address line driver 612, which transfers the 3-bit count state to the highest bit local address lines. The 4th bit is set to zero and is also transferred by the line driver 612 to the lowest bit local address line. For video and communications DMA cycles, the line driver 612 is caused by the video acknowledge and communications acknowledge signals, VIDACK and SIOACK, to place zero states on its four output lines.

The DISKACK, VIDACK, SIOACK and SLAVE output signals provided by the DMA controller 602 signify that the DMA 600 is acknowledging disk, video, communications and user resource DMA cycles, respectively. These signals are coupled to the control system for those resources to indicate a DMA cycle is in progress.

When the count register for the resource acknowledge is expired, the DMA 600 issues the end of process signal, EOP. This terminates the DMA service. For DMA cycles not involving a user resource, the DMA cycle is also terminated if the following conditions pertain; a memory ready condition exists and a I/O ready condition exists. A memory ready condition is not present when a RAM memory refresh cycle is pending or in progress and a non-refresh memory cycle is not already in progress. In the case of an address programmed into the DMA 600 not pointing to present memory, the TO timeout signal will go active and establish a memory ready condition.

AN I/O ready condition occurs during communications DMA cycles four DMA clock cycles after the normal enabled memory cycle condition. This is signified by the ENMCYC signal provided by the RAM control 502. This is done to make certain that the data is available from memory. For all other cases except during disk DMA cycles, the I/O ready condition occurs one DMA clock cycle after the write part of the DMA cycle starts (MW or IOW). During a disk DMA cycle, the I/O ready condition is established throughout the cycle. Also, during any WAIT condition asserted by the video display 300 if more memory access time is required, the I/O ready condition is inactivated.

A DMA slave mode is also terminated by I/O and memory ready conditions. Following the issuance of a slave acknowledge signal, the priority arbitration part of the DMA cycle is complete. The remainder of the DMA slave cycle is controlled by the user bus interface 100. During such cycles, the memory ready condition is unconditionally established. One DMA clock cycle after the SLAVERQ signal from the user bus interface 100 terminates, the I/O ready condition is established and the DMA user slave cycle terminates.

Reference is now directed to FIGURES 1 and 14 for a detailed description of the I/O address decoder 1400, which includes a decoder 1402, a fast I/O detector 1404 and a MW inhibit generator 1406. The decoder 1402 is coupled to the address lines 1 - 6 of the local address bus 32 and in a conventional manner provides decode signals in accordance with the address signals on those lines at times determined by either the input/output device select signal (IOCS) or the input/output read bus command signal (IOR). Several of the decode signals provided by the decoder 1402 are coupled to the input of a fast I/O detector 1404 that performs an OR function to provide a single FASTIO decode signal at its output, if any one of its inputs receives a decode signal. The FASTIO decode signal is used in the system to indicate that an addressed I/O resource does not require wait states. For all other I/O resource addresses, the IOB device select signal (IOBCS) is active. This causes two things to occur.  Wait states are provided during bus cycles for the I/O instructions that refer to the other I/O resources and, for input instructions, it causes the data to be sent over the local I/O bus 28 instead of directly over the local data bus 30.

In the preferred embodiment of the computing data processing system 10 of the present invention, the following resources do not require wait states, hence, their decode signals are coupled to the fast I/O detector 1404:

>Hard or Floppy Disks, DCI1 or 2
>DMA Extended Address Counter, DMACS
>TTL Communications, COMMF
>Video Global Attribute, GACCS
>Printer, LPTWDC

The MW inhibit generator 1406 associated with the I/O address decoder 1400 generates the aforementioned MWINH- signal when an attempt is made to write in protected RAM memory addresses.  This is achieved by minitoring the address lines corresponding to the protected addresses, which in the preferred embodiment are LAF-13.

Reference is now directed to FIGURES 1, 4 and 16 for a detailed description of the timing and interrupt control 700.  The interrupt scheme employed in local computing system 12 provides both non-maskable interrupt control and maskable interrupt control. The timing and interrupt control includes a programmable interrupt detector 702 and a timing and interrupt processor 704. Up to eight interrupt input signals, INTRO-7, are supported by the interrupt processor 704, which is based on the Intel Corporation model 8259 programmable interrupt controller. Only maskable interrupt signals, INTR, are processed by the interrupt controller 700 before sending a maskable interrupt command, INTR, to the processor 400. Four of the interrupt signal inputs to the interrupt processor 704 are reserved for the local computing system 12. The four other interrupt inputs are available for coupling to other 8259 interrupt controller based interrupt processors included in the user computing system 12.

In the computing data processing system 10, the interrupt detector 702 is coupled to the processor 400 via the local system bus 16 and is selectively programmable through masking bits to ignore conditions that ordinarily cause the generator of a maskable interrupt signal. Ordinarily, non-maskable interrupts cannot be masked by software and are employed to protect resources or computing systems from damage. For example, the sources of the non-maskable interrupt command generated by the interrupt detector 702 are power failure, unauthorized memory write, memory failure and bus timeout. The occurrence of any one of these events will cause the detector 702 to issue the NMI interrupt command to the processor 400. In response to the receipt of the NHI interrupt command, the processor reads an interrupt status register included in the detector 702 via the local system bus 16 to determine the interrupt cause and signals the operator of the occurrence of the non-maskable interrupt condition.

A power failure interrupt condition is detected by monitoring the 60Hz power signal transitions. When a missing transition occurs, it is detected by the interrupt detector 702, which responsively causes the NMI command to be sent to the processor 400. The command is also coupled to the disk and control 1000 to disable the disk for purposes of minimizing disk damage. If the power comes up again before the operator turns the system power switch off, the local computing system 12 will reset and reboot itself automatically.

The interrupt detector 702 also sends an NMI command to the processor 400 in response to the receipt of a memory write inhibit signal, MWINH, from the I/O address decoder 1400 (FIG. 14) whenever an attempt is made to write in those memory addresses for memory resources that are protected against a memory write operation. The MWINH signal is also coupled to the RAM control 502 (FIG. 7) for memory 500 to inhibit the attempted write operation.

As described hereinbefore, the processor 400 monitors bus cycles and generates a timeout signal, TO, if it finds none has occurred within 6 msec after a read/write command has been sent to a memory or I/O resource. This timeout signal is coupled to the interrupt detector 702, which responds by returning a NMI command to the processor 400. The timeout interrupt is designed to protect against non-existent devices and faulty programs.

The aforedescribed non-maskable interrupts have the highest priority status of all interrupts and are able to obtain service from the processor 400 faster.

Of the four interrupt signal inputs to the interrupt processor 704 reserved for the local computing system 12, one is satisfied by the interrupt detector 702 and the other three are satisfied directly by the SIO communication interface 1100 (FIG. 20), the interval timer 800 (FIG. 15) and the disk 1000, (FIG. 21), respectively. These four maskable interrupt signal inputs, together with the other four interrupt signal inputs reserved for users are of a lower priority than the non-maskable interrupts at the following levels of descending priority: communication interrupt, level 1; interval timer interrupt, level 3; interrupt detector 702, level 4; disk, level 7; and user interrupts distributed over priority levels 0, 2, 5 and 6. The interrupt signals from the aforedescribed sources are coupled to the interrupt processor 704, when they are passed to the processor 400 in proper priority order for execution.

Referring first to the communications interrupt, the SIO communications interface generates a level 1 interrupt when it is ready to receive a message, when it has received a message, or when a noteworthy external or internal status condition has occurred, such as loss of carrier. The level 1 interrupt signals are coupled directly to the interrupt processor 704.

The interval timer 800 provides level 3 interrupts at its programmable rate.

Normally, a level 7 interrupt is provided by the disk 1000 at the completion of a DMA block transfer or other command to the disk controller. Abnormal or error conditions in the operation of the disk 1000 can be communicated to the interrupt processor 704 as level 7 interrupts. The level 7 interrupt signals are coupled directly to the interrupt processor 704.

There are several different resources that are sources of level 4 interrupt signals. The interrupt detector 702 (FIG. 16) monitors the different resources for signals indicative of interrupt conditions and responsively generates a level 4 interrupt signal whenever an interrupt condition signal occurs. Three sources of level 4 interrupts are included in the preferred embodiment of the data processing system 10; the printer 900, the keyboard 200 and the real time clock. A printer related level 4 interrupt signal is allowed to be asserted following the occurrence of a printer acknowledge signal, LPTACK. The real time clock signal is derived from the 60Hz power supply signal and a real time clock related level 4 interrupt signal is allowed to be asserted upon the occurrence of a real time clock strobe. A keyboard related level 4 interrupt signal is asserted upon the occurrence of a keyboard interrupt signal, KBDINT. If a level 4 interrupt occurs, the interrupt detector 702 is only able to identify it as that level, not as the specified device that caused the interrupt. Upon receipt of the related interrupt command, INTR, from the timing and interrupt control 700, the processor 400 polls the possible sources individually to determine the cause of the interrupt. Each of the possible sources has a status register that reflects the interrupt condition of the source.

The interrupt processor 704 responds to the occurrence of an interrupt signal at one of its inputs, INTRO-7, by issuing an interrupt command, INTR, and interrupt vector to the processor 400. The interrupt vector is communicated to the processor 400 via the I/O bus 28. (The I/O bus 28 is also used for programming the interrupt processor 704. This occurs when the address decoder 1400 (FIG. 14) asserts the select signal (PICCS) for the interrupt processor 707. The IOR and IOW strobes are used to enable the transfer of information during programming.) If the interrupt is enabled within the processor 400, an interrupt acknowledge sequence is executed. A sequence of two INTA pulses are issued to the interrupt processor 704 by the processor 400. The first one is used by the interrupt processor 704 to decide which interrupt INTRO-7 it has received as the highest priority and the second is used to cause the sending of the appropriate interrupt vector to the processor 400. If the highest priority interrupt was provided by a resource of the local computing system 12, the interrupt processor 704 supplies the interrupt vector to the processor 400. However, if an interrupt signal was received from a user resource, i.e., a level 0, 2, 5 or 6 interrupt signal, the interrupt vector can be supplied by the user system 14. In either case, the interrupt processor 704 resolves priority and, therefore, receives the two INTA pulses.

When a user resource has supplied the interrupt signal, the interrupt processor 704 outputs a 3-bit binary number on the cascade lines, CAS0-2, identifying the interrupting user resource. The cascade number is eventually passed to the user system 14 via lines 8 - 9 of the CPU bus 26 and local address bus 32 under the control of the user bus control 102 (FIG. 5). The second of a sequence of cascade enable signals (MCE) issued by the user bus control 102 just prior to the second INTA pulse specifies the time that the lines are valid for the 3-bit binary cascade number. During such sequences, the processor 400 asserts the processor lock condition by issuing an active PLOCK signal to the user bus control 102 just prior to the first INTA pulse and makes the signal line inactive just prior to the second INTA. This causes the user bus control to not release the user bus 18 until the second INTA condition is complete.

When the user bus control 102 acquires control of the user system bus 18, a user bus address enable signal (MBAEN) is asserted and is coupled to the interrupt processor 702. This causes the cascade outputs to be asserted by the interrupt processor.

Whenever the interrupt processur 702 wants to output on the local I/O bus 28, such as during the sending of interrupt vectors to the processor 400, the interrupt processor 704 asserts its DEN59 and INTADEN outputs. (During user-initiated interrupt cycles, the DMA and bus control 600 responds to the DEN59 signal by issuing the ADTOMEM control signal that enables the drivers associated with the user bus interface 100 to transfer the interrupt vector from the user system bus 18 to the local system bus 16.) The INTADEN is also coupled to the DMA and bus control 600, which responds by generating the control signal, MEMTOIOB. This signal enables the drives associated with the local I/O bus interface 1300 to transfer the interrupt vector to the local data bus 30.

The interrupt processor 704 issues a master acknowledge signal (MASACK) for the INTA pulses. This signal is coupled to the DMA and bus control 600, which issues an immediate XACK transfer acknowledge signal for the first received INTA pulse. The XACK transfer acknowledge signal for the second received INTA pulse is sent 300 ns after the INTA pulse sequence portion of the interrupt cycle started, thus allowing a 300 nsec access time. The 300 nsec period is determined by a 300 nsec signal generated by a timing signal generator included in the timing and interrupt processor 704. The timing signal generator supplies 100, 400, and 500 used to time ready state according to the type of bus cycle in progress, and measures intervals from the start of the commanded bus cycle.

Reference is now directed to FIGURES 1 and 5 for a detailed description of the user bus control portion 102 of the user bus interface 100. As described hereinabove, the user bus control 102 functions to establish the operating mode for the user bus interface 100, namely, either independent (the local and user system buses 16 and 18 operate independently and asynchronously), master (the local system bus 16 controls the user system bus 18, driving the user's command and signal lines) and slave (the user system bus 18 controls the local system bus 16).

The user bus control 102 is centered around the Intel Corporation model 8289 bus arbitrator and includes a state generator 104 and an arbitrator and controller 106. There are two times when the user bus interface 100 is placed in the master mode; for accesses by the processor 400 to user memory or I/O resources and for executing interrupt acknowledge cycles.

To acquire the user bus, the user bus control 102 executes the following. It asserts the bus and common bus request signals (BREQ and CBRQ) and makes the bus priority out signal (BRPO) inactive. This signifies to the user system 14 that the local system 12 wants to be master. If the bus busy status signal (BUSY) is inactive and the bus priority in signal (BPRN) is active at the next clock signal (BCLK), the BUSY signal is asserted and the common bus request signal (CBRQ) is inactivated. When the local system 10 is done with the user system bus 18, the user bus control 102 stops asserting the BUSY signal and no longer forces the BRPO signal inactive. If the BPRN signal is active, the BPRO signal will go active.

To acquire the user system bus 18, the state generator 104 of the user bus control 102 monitors the SO-2 status signals from the processor 400. When they indicate a bus cycle, namely, memory, I/O or interrupt acknowledge, the arbitrator and controller 104 of the user bus control 102 executes the user system bus arbitration handshake to acquire control of the user system bus 18, if either of the following is true:

1. The synchronized lock signal (SLOCK) indicates that an instruction prefixed by a lock or a locked interrupt acknowledge cycle is in progress; or

2. The present address from the processor refers to a user bus memory or I/O resource. This condition is determined by examination of the IOCYC line, ADLF line (which carries the status of the ADF line of the CPU bus 26 latched by the address latch enable signal, AEN) and the S2L line (which carries the status of the S2 status line latched by the AEN signal.

While user bus control 102 is in the process of acquiring the user system bus 18, indicated by an active ADORLOCK signal and an inactive AEN89 signal, the DMA and bus control 600 asserts the user bus acquisition pending signal (MBPNG). This disables the processor 400 from asserting its command lines until the user system bus 18 is acquired.

An active MASTER signal is issued by the user bus control 102, which enables the master mode cycle to be executed. After the user system bus is acquired, the AEN89 signal is asserted. If the processor 400 is addressing the user system bus 18, the user bus address enable signal (MBAEN) is asserted, as well. The MASTER signal will be asserted at the second following MEMCLK clock signal, if no DMA activity is in process, which is signified by the absence of the HLDA signal. The two MEMCLK clock cycle delay before asserting the MASTER signal allows the user resource address signal to be driven from the local system bus 16 before execution of the master mode cycle is initiated. The AEN89 signal is also used by the DMA 600 to determine when the processor 400 is waiting for the user system bus 18. The MBAEN signal is coupled to the timing and interrupt control 700, which uses it to determine that the local system bus 16 has control of the user system bus 18 so that an interrupt acknowledge cycle can be completed.

If the user bus address enable signal (MBAEN) goes inactive, i.e., the user bus control 102 loses control of the user system bus 18, the assertion of the MASTER signal is removed.

The asserted MASTER signal allows the bus cycle commands MR, MW, INTA, IOR and IOW then on the command lines of the local system bus 16 to be ouput on the command lines of user system bus 18, namely, MRDC, MWTC, INTA, IORDC and IOWTC. In addition, the MASTER signal causes the ONBUS signal to be asserted. The MASTER and ONBUS signals are employed to condition address drivers 106 (FIG. 12B) to drive the user address bus 34. Accesses to the user system 14 from the local system 12 are in the low 512KB (kilobyte) of address space. The MASTER signal causes a drive means 107 to drive a high state signal on line ADR13 of the user address bus 34, which is recognized as a logical zero state in the user system bus 18. Line ADR13 of user address bus 34 is independent of the corresponding LA13 line of the local address bus 32. Consequently, all addresses placed on the user address bus 34 by the local system 12 are mapped to the low 512KB user system address range. The other ADRO-12 address lines of the user address bus 34 are driven from the LAO-12 lines of the local address bus 32 by bidirectional drivers 108. The active MASTER signal determines the direction and the ONBUS signal enables the driver 108.

Data is transferred between the local data bus 30 and the user data bus 36 by bidirectional drivers 110 (FIG. 11B). The MEMTOMB signal provided by the DMA and bus control 600 during mode cycles establishes the transfer. The drivers 110 are enabled to execute a data transfer by a bus enable signal asserted in response to the occurrence of the ONBUS signal.

When the signal LOCK (inverted PLOCK) is received, the user bus control 102 processes it to effect generation of the ADORLOCK signal. If the AEN89 signal is not asserted when ADORLOCK signal is asserted, the DMA and bus control 600 returns the user bus pending signal, MBPNDG, which indicates that the user system bus 18 is being, but has not been acquired. Once the user system bus 18 is acquired, the user bus control 102 asserts the AEN89 signal, which causes the DMA to inactivate the MBPNDG signal. This enables the user bus control 102 to assert the LOCKED signal, which is used by the DMA 600 to determine that the local system bus 16 is locked.

The slave mode is entered when the user computing system 14 makes use of the RAM section of the memory 500 of the local computing system. A request for service (SLAVERQ) is generated by the user bus control 102 when a memory read or memory write command (MRDC or MWTC) is on the user system bus 18 at the same time as an address that refers to the local system bus is on the user system bus 18. These conditions are detected by monitoring the ADR13 line of the user address bus 34 and the MRDC and MWTC user system control lines.

The SLAVERQ signal is coupled to the DMA 600, which responds in the manner described hereinbefore to assert the SLAVE signal as long as SLAVERQ signal is asserted. The user bus control 102 responds to the SLAVE signal by asserting the ONBUS signal. This enables the address drivers 108 (FIG. 12B) of the user bus interface 100, the direction of the transfer established by the inactivated MASTER signal such that the user address bus 34 drives the local address bus 32. In addition, the SLAVE signal activates a drive means 109 to drive a low state signal on line LA13 of the local address bus 32, which is recognized as a logical zero state in the local system bus 16. Consequently, all addresses placed on the local address bus 32 by the user system 14 are mapped to the low 512KB local system address range.

Data is transferred between the local data bus 30 and the user data bus 36 by the aforedescribed drivers 110 (FIG. 11B). The MEMTOMB signal provided by the DMA and bus control 600 during slave mode cycles establishes the transfers. The drivers 110 are enabled to execute a data transfer by a bus enable signal asserted in response to the occurrence of the ONBUS signal.

Each bus cycle command on the user system bus 18 is completed by the XACK transfer acknowledge signal going active.  It is the responsibility of the user resource involved in the transfer to assert the XACK signal.  When the local system bus 16 is the slave, the XACK signal is asserted by the DMA and bus control 600.

Reference is now directed to FIGURES 1 and 15 for a detailed description of the intervals timer 800. An Intel model 8253 programmable timer is employed to provide an interval timer/counter function. It generates accurate time delays under software control. When initialized and commanded, the timer 800 counts out an interval and issues a signal indicative of the counted interval. The interval timer is programmed via the local I/O bus 28 when its device select input TMRICS, is active and either IOW or IOR is active. The LA1 and LA2 lines of the local address bus 32 select the interval timer's internal register to be read or written. Two of three independent counters of the interval timer 800 are used as band rate timers to divide the 1.23 MHz output of a communications oscillator and make counter one clock, C1CLK, for communications channel B and counter two clock, C2CLK for communications channel A. The third counter is used to generate level 3 interrupt outputs, INTR3. An input clock frequency of 19.53 kHz is used for this purpose, which is obtained by dividing the 78kHz clock from the processor 400 by four. The interrupt output is coupled to the timing and interrupt control 700 as the level 3 interrupt and also to an input/output control register to be read by software.

Reference is now directed to FIGURES 1 and 6 for a detailed description of the PROM boot control portion 520 of the memory and control 500. The PROM boot control 520 includes an AND gate 522 that has its inputs coupled to lines LA10-LA13 of the local address bus 32 and the MR line. Any occurrence of a MR signal at the time the LA10-LA13 address lines are asserted decodes memory reads in the top 32K of memory 500 and generates a signal to select the BOOM PROM memory 524. The BOOT PROM memory 524 responds to the select signal and the address on the local address bus 32 to read the addressed contents onto the local data bus 30 for input to the processor 400.

Reference is now directed to FIGURES 1 and 7 for a detailed description of the memory control portion 502 of the memory and control 500. The memory control 502 generates the control signals for the RAM memory and some timing signals for the processor 400, DMA 600, video and I/O resources. The 78 kHz is used primarily to start RAM memory refresh cycles. A refresh is started by the falling transition of the 78 khZ clock. The refresh pending signal (RFPNG) is then synchronized to the DMCLK clock signal and is used in the DMA and bus control 600 to cause wait states if the processor 400 uses memory 500 during refresh. If a refresh is permitted, a refresh go signal (RFGO) is asserted and, after a delay (allowing the RAM memory arrays to use the RFGO signal to switch the RAM address lines to the refresh address), the RAM row address strobe (RARAS) is asserted. After an interval sufficient to refresh the then address RAM memory locations, an ENDCYC signal is asserted. At the next MEMCLK clock time, a refresh done signal (RFDONE) is asserted. This causes the refresh address to increment for the next refresh cycle. In addition, the RFDONE signal clears the RFGO signal at the next MEMCLK clock time. This completes the RAM refresh cycle.

Memory read cycles are started by receipt of an active MR signal. If no refresh cycle is in progress and the PRESELECT is active (signifying the local address bus 32 points to RAM), the enable memory cycle signal (ENMCYC) is asserted, as well as its buffered form, BENMCYC. In response to the assertion of the ENMCYC, the memory control 502 is inhibited from starting a refresh cycle while a read or write cycle is in progress. The assertion of the ENMCYC signal also activates the RARAS signal, the row address strobe for the RAM's. Subsequently, the column multiplex signal (COLMPX) is activated to switch address lines from row address to column address. Following the COLMPX signal, the CASTIME signal, or column address strobe time, is asserted, which causes the column address generator 530 (FIG. 8) to generate the column address for the particular bank of RAM's selected by the local address bus 32. After the CASTIME signal is asserted, the predicted RAM acknowledge signal (PRACK) is asserted, which indicates to the ready timing logic that the RAM cycle is about to complete. Following the assertion of the PRACK signal, the ENDCYC signal is asserted, which results in the termination of the memory access. For memory cycles not involving RAM refresh, an enabled end signal (ENEND) is asserted. An interval following the assertion of the ENEND, the RACK signal is asserted. This signal is used to form the transfer acknowledge signal, XACK. FIGURE 25 is a timing diagram illustrating a memory read cycle.

A memory write bus cycle operates the same way as a memory read bus cycle except for the following differences. A memory write signal (MW) is blocked at the input of the memory control 502 for memory protection if a memory write inhibit signal is asserted at the input. The low-bank and high-bank write enable signals, RALOWE and RAHIWE, respectively are generated. The RALOWE signal is active for write memory cycles when the low-order local bus address bit, LAO is low (pointing to a low memory bank). The RAHIWE is active for write memory cycles when the low-order bus address bit, LAO, is high (pointing to a high memory bank) or during 16 bit accesses indicated by the local bus high enable signal (LBHEN).

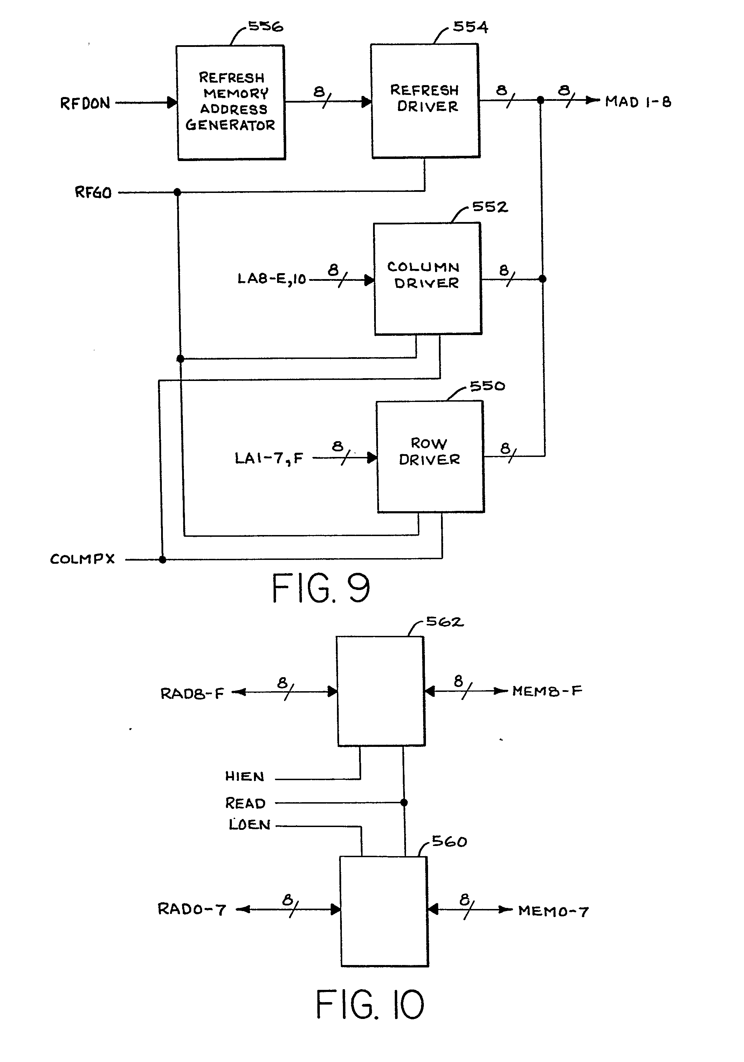

Reference is now directed to FIGURES 8 and 9 for a detailed description of the addressing of the RAM memory. The semiconductor RAM's contain seven address lines, which are multiplexed so that fourteen address bits can be represented with seven pins. Each chip is organized as a square matrix of 128 rows by 128 columns and each row/column combination gives one bit or cell of memory. The row address strobe signal has two functions: it latches the row address on the seven pins and it accesses the specified row of 128 cells. The column address strobe also has two functions: it latches column addresses, and performs the data operation, read or write, on the one cell specified by the column address of the 128 cells already accessed by the row address strobe. A write cycle is caused if the write enable pin is asserted at the leading edge of the column address strobe. A read cycle is caused if it is inactive.

The RAM array is organized as four banks of eighteen chips each, with each bank corresponding to a word. All seventy-two chips in the array have the same row address strobe. Bank selection is done by asserting only one of the column address strobes, CAS0-3. The data-in and data-out pins of each chip are tied together, making a bidirectional data bus, RAD0-RADF. The

seven address pins (MAD1-7) are connected in parallel to all seventy-two chips. The two write enable signals, RAHIWE (high byte write enable) and RALOWE (low byte write enable) cause writing in either the low byte, the high byte or both. Each write enable signal is coupled to 36 RAM chips.

Referring first to FIGURE 8, the RAM column address generator 530 includes a CAS PROM 532 and a CAS decoder 534. The eight CAS0-7 outputs for eight possible RAM banks are generated by a CAS decoder 534 at times determine by the CASTIME signal during enabled memory cycles (ENMCYC). The selection of which CAS output to activate is made by the CAS PROM 532 based on the high-order bits, LAF-LA13, of the local address bus 32. Each one of the CAS0-8 lines is coupled to a bank of the RAM array. There are three sources for the address driven on the RAM chip address pins, the row address driver 550, the column address driver 552 and the refresh row address driver 554. The row address driver 550 is driven from the local address bus lines LA1-7 and F. The column address driver 552 is driven from the local address bus lines LA8-E and 10. The refresh row address driver 554 is driven from a refresh address counter 556. Each time a refresh cycle has completed, the RFDONE signal causes the counter 556 to increment. Selection between the sources is effected by the RFGO and COLMPX signals. When the RFGO signal is active, it enables the refresh row address driver 554 and disables the other two drivers 550 and 552. The disable is removed from the two drivers 550 and 552 and the refresh row address driver is disable when the RFGO signal is inactive. With the RFGO signal inactive, the row address driver 550 is normally enabled. However, an active COLMPX signal disables the row address driver 550 and enables the column address driver 552. The enabled driver drives the memory address onto the MAD bus for coupling to the RAM memory 500.

Data to and from the RAM memory 500 is conveyed by the sixteen lines RADO-F and is buffered from the local data bus 30 by two transceivers 560 and 562. The transmission direction of the transceivers 560 and 562 is established by a buffered MR signal, designated READ. The enable signal, HIEN, for the high byte transceiver 562 is asserted when the memory 500 is addressed and either a read is in progress or a high order byte write enable signal is asserted. The enable signal, LOEN, for the low byte transceivers is asserted when the memory 500 is addressed and either a read is in progress or a low order byte write enable signal is asserted. Transmission of data to and from the RAM chips is via the lines RADO-7 and the lines RAD8-F.

With reference to FIGURE 17, the keyboard interface portion 202 of the keyboard 200 includes a model 8251A type universal synchronous asynchronous transmitter (USART) for communications with the keyboard. The USART interface 202 communicates the serial keyboard data-in and data-out lines, KBDI and KBDO, respectively, to the parallel local I/O bus lines IOB0-7 of the local system 12. It accepts parallel data from the local I/O bus 28 and converts it into a continuous serial data stream for transmission to the keyboard over the KBDO line. Conversely, the USART accepts continuous serial data over the KBDI line and converts it into parallel data for transmission on the local I/O bus 28. The baud rate for both transmitting to and receiving from the keyboard is the 19.53 kHz clock. Processor 400 programs the USART interface when the device select line, KBDCS, is active during input/output read and write bus cycles. The BIOW and BIOR determine whether data is being written on or read from the local I/O bus lines IOB0-7. The LA1 line is used to select registers within the USART. When the USART 202 is ready to transmit to the local I/O bus 28 or has received a character, the keyboard interrupt signal, KBDINT, is asserted to cause a level 4 interrupt.

The video display and control 300 is interfaced to the local data bus 30 and local address bus 32 of the video interface portion 302 of the video display and control. Under control of the DMA, data on the section MEM0-F lines of the local data bus is clocked into a holding register, whose outputs are multiplexed onto the lower eight bits of the data bus (DBUS) of the video system. When data is transferred from the video system to the local data bus 30, it is transferred from the video system's symbol bus (SYMBUS) to the lower ten bit lines, MEM0-9, of the local data bus 30.

To clock data on the MEM0-F lines into the holding register, a DATALD signal is asserted. This signal also latches the address data on the local address bus lines LA1-C. The DATALD signal is obtained from a logical AND of the VIDACK and IOW signals. The multiplexing of the data held in the registers onto the DBUS is effected by the most significant byte and low significant byte signals (MSB and LSB, respectively). The DATALD signal is used by the video system to generate write strobes for writing the data held in the register to the video system as a sequence of two bytes, determined by the MSB and LSB signals.  The status of the EASD signal controls the inputting of the address to the video sytem over the symbol address bus, SABUS.  This process repeats until the EOP signal is received by the video system from the DMA 600

Data is read from the SABUS lines to the local data bus lines by the logical AND of the symbol read signal, SYMRD, and the input/output read bus cycle signal, IOR.  This condition is maintained until the EOP signal is received.

Referring now to FIGURE 1 and 19, the printer interface portion 902 of the printer and control will be described.  An 8-bit parallel interface for a Centronics-type printer is provided.  The printer interface outputs ASCII data from a memory buffer using the low byte, MEMO-7, of the local data bus 30.  A printer status register is included for providing status information to the local system 12 over the local data bus 30.  When the IOW bus cycle signal is active during the occurrence of a printer I/O address on the local address bus lines to the address decoder 1400, the printer write command (LPTWDC) is activated.  This causes data on the MEMO-7 lines of the local data bus to be latched for driving the data lines, LPTO-7, of the printer 900.  Following the latching, a strobe signal is sent to the printer, causing it to accept the latched data.  The strobe signal also causes a BUFBUSY signal to be asserted, which is indicative of the data having been sent to the printer but has not been acknowledged. The printer acknowledges receipt of the data by asserting a printer acknowledge signal, which is coupled to clear the BUFBUSY signal.

Status information from the printer 900 is supplied to the local computing system 12 via the bus bits MEMO-3 of the local data bus 30. The printer read data command, LPTRC, is activated to drive the status information onto the local data bus 30 when the IOR bus cycle signal is active during the occurrence of a printer address on the local address bus lines to the address decoder 1400. The status information includes: BUFBUSY(printer buffer full); NOPAPER (printer out of paper); LPTSELECT (printer on-line); and LPTBUSY (printer doing something that will take a long time to complete).

Attention is now directed to FIGURE 20 for a discussion of the serial input/output (S10) control interface of the two independent communication channels A and B. Each channel is brought to standard 25-pin D-type female connect ors. Channel B operates according to the RS-232 industry standard protocol while channel A can operate according to either the RS-232 or RS-422 industry standard protocol. The RS-422 or RS-232 selection is made by jumpers.

The interface uses a type Z80A SIO/2 communications controller. Its basic function in the computing data processing system 10 of the present invention is to convert between parallel data on a local system bus and serial data on the output channels A and B. Information about the RS-232 and RS-422 protocols may be had by reference to their standard descriptions and the technical manual for the Z80A-SIO published by Zilog.

In addition to the SIO controller, the SIO interface 1102 includes a register to augment the controller. When the SIO interface is not in a DMA mode, SIOACK will be inactive. This allows the signals on LA1-2 bit lines of the local address bus 30 and device select line, COMMS, to be communicated directly to the SIO controller, which selects it to communicate over the local I/O bus 28. Registers within the SIO interface 1102 are read and written within the IOR and IOW bus cycle signals. When the SIO interface 1102 wishes to interrupt the processor 400, it asserts a level 1 interrupt signal, INT1B.

A DMA is requested by the SIO interface 1102 by its issuance of a SIORQ signal to the DMA 600. When a following SIOACK acknowledge signal is asserted at the input of the SIO interface 1102, an SIO channel DMA cycle starts. The DMA then asserts either the IOW or the IOR bus cycle command to effect a transfer of data between channel A (the only channel that can be used in the DMA) and the local I/O bus 28. The other channel B is identified by the communications channel select signal COMMIA. If a memory read cycle is involved, the enabled memory cycle signal (ENMYCY) is asserted to delay execution of the IOR bus cycle so that data will be on the local I/O bus when the SIO interface 102 latches it.

The SIO interface 1102 is programmed via the MEMO-F bit lines of the local data bus 30. The low order four bits, corresponding to MEMO-MEM3 are read/write control bits. The other high order eight bits are ready only status bits. The low order bits are active when either a buffered BIOW or BIOR bus cycle signal is done to the communication select COMMF.

C1CLK and C2CLK are externally provided clock signals that are switch selectable for communication clocks. However, the SIO interface 1102 also is capable of internally generating the communication clock signal.

Reference is now made to FIGURES 1 and 21 for a description of the interface portion 1102 of the disk and control 1000. The disk interface 1002 drives and receives signals that interface the disk to the computing data processing system 10. During IOW bus cycles, a buffered

IOW signal latches data on the local data bus lines MEMO-F for transmission to the disk. After a delay a WRSTB write strobe is sent to the disk controls. After another delay, the data is driven to the disk over lines BUSO-F. The delays ensure enough data hold and setup time.

During a 10R bus cycle, a buffered IOR signal enables the BUSO-F to MEMO-F local data bus line drivers for sending data to the local data bus 30. This occurs when the buffered IOR signal is present and one of the disks is addressed (DCI-1 or DCI-2) or disk DMA is active (DISKACK). In addition, the buffered 1OR signal causes a RDSTB read strobe to the disk controls. The buffered memory read (BMR) is sent to the disk controls to synchronize their DMA requests.

The CNTRL signal is sent to the disk controls to address the control and status registers of the disk controls, rather than data registers and is generated in response to the signal state on the line LA1 of the local address bus 28 when a DISKACK signal is asserted.

A DMA request signal (DREQ) from the disk controls is buffered to make the DISKRQ signal that is sent to the DMA 600. An interrupt request signal from the disk controls causes a level 7 interrupt signal (INT7) to be asserted. The line for coupling the acknowledge signal (ACK) to the disk controls is bidirectional. During DMA cycles, the DISKACK

causes the ACK signal to be asserted. During non-DMA activity, the disk controls assert the ACK signal whenever one of the address decodes, DCI1 or DCI2, is active. If the disk controls do not assert the ACK signal when addressed, the disk ready signal (DCIRDY) is inactivated. This causes a bus timeout in the ready logic.

The EOP signal from the DMA 600 indicates that a DMA block is complete. This is buffered to generate the BEOP signal that is sent to the disk controls.

The two address decodes, DCI1 and DCI2 are buffered to generate the two select signals, SELW and SELF, sent to the disk controls.

CLAIMS:

1.    A data processing apparatus having a plurality of system buses each capable of communicating operatively associated data processing devices for execution of data processing operations independently of data processing operations executed over other ones of said plurality of system buses with selected data transfers permitted between data processing devices operatively associated with different ones of said system buses, comprising:

a first data processing system,

a first system bus including address, data and control lines for communicating said first data processing system for execution of data processing operations,

a second system bus including address, data and control lines for communicating a second data processing system for execution of data processing operations independently of said data processing operations executed by said first data processing system, and

an interface means for selectively coupling said first and second system buses for data transfers therebetween and decoupling said system buses for prevention of data transfers therebetween, said interface means responsive to data transfer request signals provided by said first data processing system and by a second data processing system communicated by said second system bus to couple said first and second system buses temporarily for data transfers therebetween, said interface means decoupling said first and second system buses for prevention of data transfers in the absence of the provision of said data transfer request signals.

2.    The data processing apparatus of claim 1 wherein said first data processing system includes a central processing means for controlling the execution of data processing operations over said first system bus and the initiation of data transfers between said first and second system buses, and said central processing means responsive to said data transfer request signals provided by a second data processing system communicated by said second system bus to release control of the execution of data processing operations over said first system bus during data transfers between said first and second system buses.

3. The data processing apparatus of either claim 1 or claim 2 wherein the first data processing system comprises a plurality of operatively associated data processing devices coupled for communication by said first system bus for execution of data processing operations, each of said data processing devices identified by one of a plurality of addresses and responsive to address signals coupled to the address lines of said first system bus for execution of data processing operations, and said interface means responsive to address signals received from said address lines of said second system bus corresponding to only selected ones of said plurality of addresses to couple said first and second system buses for data transfer therebetween in response to data transfer request signals.

4. The data processing apparatus of claim 3 wherein one said plurality of operatively associated data processing devices is a memory means including a plurality of data storage locations each identified by one of said plurality of addresses, and said selected ones of said plurality of addresses identify selected ones of said plurality of storage locations.

5. The data processing apparatus of claim 4 wherein said interface means is coupled by said first system bus to said memory means for data transfers between said first and second system buses.

6. The data processing apparatus of claim 3 wherein the first data processing system has a range of address allocated to identify data processing devices coupled for communication by said first system bus and data processing devices coupled for communication by said second system bus, and said interface mean's responsive to any address signals received from the address lines of said first system bus identifying data processing devices coupled for communication by said second system bus to couple said first and second system buses for data transfers therebetween in response to data transfer request signals.

7. The data processing apparatus of claim 2 wherein said first data processing system executes data processing operations in response to control signals coupled to the control lines of said first system bus, said control signals provided by said first data processing system at times said central processing system controls the execution of data processing operations, and said first data processing system responsive to said data transfer request signals provided by a second data processing system communicated by said second system bus to be coupled by said interface means to receive control signals coupled to the control lines of said second system bus.

8. The data processing apparatus of either claim 1 or claim 2 wherein said interface means is coupled to said first and second system buses to isolate said buses electrically except during times of data transfers between said buses, and said first data processing system includes a timing means for synchronizing the data processing operations executed by said first data processing system independently of data processing operations occurring on said second system bus, and said interface means responsive to said timing means for effecting data transfers between said first and second system

0079140

buses synchronously with data processing operations executed by said first data processing system.

9. The data processing apparatus of either claim 1 or claim 2 wherein said first data processing system includes a priority resolving means responsive to data transfer request -signals provided by said first data processing system and by a second data processing system communicated by said second system bus for controlling access to said first system bus, said priority resolving means enabling access to said first system bus by said second data processing system in favor of access by said first data processing system.

10. The data processing apparatus of claim 9 wherein said first data processing system includes a plurality of data input/output means communicated with a central processing means by said first system bus, each of said data input/output means coupled to said first system bus by a buffer means that is responsive to unique data transfer request signals to couple said data input/output means and said first system bus temporarily for data transfers therebetween, and said priority resolving means responsive to said uniques data transfer request signals for enabling access to said first system bus by said data input/output means in favor of access by said central processing means.

11. The data processing apparatus of claim 10 wherein said first data processing system includes a data storage buffer means for temporarily storing data signals for coupling to said first system bus.

FIG. I

FIG. 2

FIG. 3

0079140

0079140

**FIG. 4**

Timing and Interrupt Processor (704), part 700

Inputs: MCE, PLOCK, MEMCLK, INCMD, MW, INTA, IOW, INTR0-7 /8, IOR, LA1, PICCS, MBAEN

Outputs: LOCK, INTA, 100ns, 400ns, 500ns, TO, TMO, DEN59, INTADFN, MASACK, INTR, IOB0-7 /8, CAS0-2 /3

Interrupt Detector (702): MEM0-F /16, MW, TO, KBDINT, 60HZ, LA1,2,F-13 /7, BIOM, 1.23MHZ, LPTACK, REST, TMRINT

Outputs: NMI, INTR4, POWER OK, MWINH

**FIG. 5**

Arbitrator and Controller (102), 106

Inputs: LA13, AD13, MR, MW, IOR, IOW, INTA, REST, MBPNG, SLAVE, HLDA, MEMCLCK, PLOCK, LOCK, PCLOCK, LOCPROM, ADLF-13 /5, S2L, MBIO, IOCYC

Outputs: MRDC, MWTC, INTA, IORDC, IOWTC, BCLK, BREQ, BPRN, BUSY, CBRQ, SLAVERQ, PROMCS, MASTER, ADORLOCK, AEN89, MBAEN, LOCKED, LOC MASTER, ONBUS, ONBDIO, SLOCK

State Generator (104): S0, S1, S2

0079140

LAI-LAD ——

13/

BOOT
PROM

520

16/ → MEMO - MEM F

524

522

MR
LAI0-LA13 4/

FIG. 6

502

MEMORY
CONTROL

PRESELECT →
MR →
MW →
MWINH →
LBHEN →
LAO →

→ ENDCYC
→ ENMCYC
→ CASTIME
→ BMEMCLK
→ MEMCLK
→ DMCLK
→ 78 KHz
→ MCYC
→ INPROG
→ PRACK
→ RFGO
→ RFDONE
→ RFPNDG
→ ENEND
→ BENMCYC
→ XACK WINDOW
→ RACK
→ RARAS
→ COLMPX
→ RALOWE
→ RAHIWE

FIG. 7

530

532

CAS
PROM

534

CAS
DECODER

8/ → CAS-7

LAF-13 5/

CASTIME
ENMCYC

FIG. 8

0079140

FIG. 9

FIG. 10

ADO-F

1204    1206

ADTOMEM    MEMTOAD

MEMO-F

FIG. IIa

110

MEMO-F    DATO-F

ONBUS    MEMTOMB

FIG. IIb

1304

MEMO-7    IOBO-7

ABSTB    MEMTOIOB

FIG. IIc

1202

ADO-13    LAO-13

ALE
HLDA

FIG. I2a

106

LAO-12    ADRO-12

ONBUS
MASTER

(+)

107

ADR13

109

LA13

FIG. I2b

39

DMA4-7    LA4-7

DMALN    SLAVE

38

DMAO-3    LAO-3

1302

IOBO-7    LA8-10

DMAEN    ADSTB

FIG. I2c

FIG. 13

FIG. 14

0079140

**FIG. 15**

800

INTERVAL TIMER

Inputs:
- IOBO-7 (8)
- BIOW
- LAI,2 (2)
- TMRICS
- BIOR
- 78 KHz
- TMRICS
- 1.23 MHz
- 19.53 KHz

Outputs:
- CZCLK
- CICLK
- INT3

**FIG. 16**

702

NMI AND LEVEL 4 INTERRUPT GENERATOR

Inputs:
- MW
- TO
- ICTLRDC
- 60 HZ
- KBDINT
- LPTACK
- RESET
- MWINT

Outputs:
- NMI
- INTR 4
- STROBE
- POWEROK

**FIG. 17**

202

USART

Inputs:
- BIOW
- BIOR
- LAI
- LAO-7 (8)
- KBINT
- KBDCS
- 19.53 kHz
- 1.23 MHz
- REST

Inputs/Outputs:
- KBDI
- KBDO

**FIG. 18**

302

VIDEO INTERFACE

Inputs:
- LAI-C (12)
- MEMO-F (16)
- MSB
- LSB
- DATALD
- SYMRD
- IOR

Outputs:
- SABUS (12)
- DBUS
- SYMBUS (10)
- ESAD

**FIG. 19**

902

PRINTER INTERFACE

Inputs:
- MEMO-7 (8)
- LPTRDC
- LPTWDC
- NO PAPER
- LPTSELECT
- LPTBUSY
- BUFBUSY

Outputs:
- STROBE
- LPTO-7 (8)

FIG. 20

FIG. 21

0079140

FIG. 22

FIG. 23

FIG. 24

FIG. 25

FIG. 26

FIG. 27

FIG. 28

FIG. 29

FIG. 30

**0079140**

European Patent
Office

**EUROPEAN SEARCH REPORT**

Application number

EP 82 30 5494

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| X,Y | US-A-3 940 743 (DIGITAL EQUIPMENT) * Column 2, lines 27-33, 39-56; column 3, lines 20-30, 64-67; column 4, lines 41-68; column 5, lines 1-26; column 7, lines 19-23; column 8, lines 25-31, 39-43; column 12, lines 26-41; figures 1-3 * | 1,2 | G 06 F 3/04 |
| Y | DE-A-2 162 393 (KRANTZ) * Page 3, lines 13-20; page 4; page 5, lines 1-4; page 6; figures 1,2 * | 1,2 | |
| P | COMPUTER DESIGN, vol. 21, no. 2, February 1982, pages 121,122,124,126, Concord, USA R.A. GARROW: "Dual-bus design for a microcomputer" * Figures 1,2 on page 122; page 124, column 2, lines 34-40; page 126, column 1, figure 4 * | 1,2 | TECHNICAL FIELDS SEARCHED (Int. Cl. 3)  G 06 F |

The present search report has been drawn up for all claims

| Place of search THE HAGUE | Date of completion of the search 31-01-1983 | Examiner DHEERE R.F.B.M. |
|---|---|---|